# EUROPEAN PATENT APPLICATION

(11) **EP 4 844 561 A1**
(43) Date of publication of application: **25.11.2026**
(21) Application number: 24923349.5
(22) Date of filing: 30.09.2024
(51) Int. Cl.: G06F 3/06

(54) **DATA READ/WRITE METHOD AND DEVICE BASED ON MULTI-LEVEL STORAGE, AND MULTI-LEVEL STORAGE**

(30) Priority: 07.02.2024 CN 202410175983
(71) Applicant: Huawei Technologies Co., Ltd., Shenzhen, Guangdong 518129 (CN)
(72) Inventor: PAN, Wei, Shenzhen, Guangdong 518129 (CN); GUO, Xiaoxi, Shenzhen, Guangdong 518129 (CN); LEE, Wei Jian, Shenzhen, Guangdong 518129 (CN)
(74) Representative: Huawei European IPR
(86) International application number: PCT/CN2024/122786
(87) International publication number: WO 2025/167144

(57) **Abstract**

This application discloses a multilevel storage-based data read/write method and apparatus, and a multilevel storage, and belongs to the field of computer technologies. In the method, in response to a write-back request sent by a level-k storage, a level-(k+1) storage in the multilevel storage can first perform a reduce operation on data in a plurality of cache lines, corresponding to a first address, in the level-k storage, and then write a result of the reduce operation into the level-(k+1) storage. In the foregoing method, a reduce capability is offloaded from a processor core to the multilevel storage. The multilevel storage performs a reduce operation process, and integrates the reduce operation into a data write-back process between multiple levels of storages, so that the processor core can be more used to perform computing, thereby improving utilization of a computing capability of the processor core. In addition, because the reduce operation process is no longer performed by the processor core, the reduce operation process can be performed in parallel with a computational process, thereby shortening completion time of a compute task, and improving completion efficiency of the compute task.

## Description

This application claims priority to Chinese Patent Application No. 202410175983.6, filed on February 7, 2024 and entitled "MULTILEVEL STORAGE-BASED DATA READ/WRITE METHOD AND APPARATUS, AND MULTILEVEL STORAGE", which is incorporated herein by reference in its entirety.

### TECHNICAL FIELD

This application relates to the field of computer technologies, and in particular, to a multilevel storage-based data read/write method and apparatus, and a multilevel storage.

### BACKGROUND

During big data processing, when a compute task is computationally intensive, a plurality of processors are needed to perform parallel computing to complete the compute task. For example, in a training scenario of a deep learning model, when parameters of the model or intermediate results generated by computing are excessive, and exceed a main memory capacity of a single processor, the single processor cannot independently complete a training task, and a plurality of processors are needed to perform parallel computing. For example, a processor 1 and a processor 2 jointly compute an output of a layer of the model, and a compute task of the layer may be abstracted as matrix multiplication: X·A=Y, where the matrix X and the matrix A are an input and a weight of the current layer, the matrix Y is the output of the current layer, and Y needs to be used as an input for computing of a next layer after being processed by using an activation function. A process of parallel computing of the layer is as follows: The matrix X is partitioned into X1 and X2 along a row dimension, the matrix A is partitioned into A1 and A2 along a column dimension, a processor core in the processor 1 completes computing: X1·A1=Y1, a processor core in the processor 2 completes computing: X2·A2=Y2, then a reduce (reduce) operation (for example, a matrix addition operation) is performed on the intermediate result Y1 obtained by the processor core in the processor 1 and the intermediate result Y2 obtained by the processor core in the processor 2, to obtain the compute result Y, and Y is synchronized to a main memory in the processor 1 and a main memory in the processor 2, so that the processor core in the processor 1 and the processor core in the processor 2 read Y, to execute a compute task of the next layer of the model.

In related technologies, a processor core in a processor provides a computing capability and a reduce capability. The computing capability means that the processor core can perform a computational process to obtain an intermediate result of a compute task. The reduce capability means that the processor core can perform, by using an all-reduce (all-reduce) collective communication method, a reduce operation on an intermediate result obtained by a processor core in each processor, and synchronize a result of the reduce operation to a main memory in each processor. This process includes: The processor core in each processor determines, based on a number, a data block that the processor core is responsible for reducing; the processor core in each processor sends, to a corresponding processor core in another processor in an inter-card communication mode, a data block that is in the main memory in each processor and that the processor core in the another processor is responsible for reducing, and receives a data block that is sent by a processor core in another processor and that the processor core in each processor is responsible for reducing; each processor core performs a reduce operation on a data block that the processor core is responsible for reducing; each processor core writes a result of the reduce operation into the main memory in each processor respectively, and sends, to another processor core, the result of the reduce operation obtained by each processor core; and the another processor core writes the received result of the reduce operation into a main memory in a processor, so that the main memory in each processor stores a complete compute result.

However, in the foregoing method, the all-reduce collective communication method can be used to perform a reduce operation process only after each processor core completes a computational process of an intermediate result. As a result, completion time of a compute task is relatively long, and completion efficiency is relatively low. In addition, when the processor core uses a reduce capability of the processor core to perform the reduce operation process, the processor core cannot use a computing capability of the processor core to perform a compute task of a next layer of a model. Consequently, a computing capability of a processor is in an idle state, and utilization of the computing capability of the processor core is low, causing a waste of compute resources.

### SUMMARY

Embodiments of this application provide a multilevel storage-based data read/write method and apparatus, and a multilevel storage, to shorten completion time of a compute task, improve completion efficiency of the compute task, improve utilization of a computing capability of a processor core, and reduce a waste of compute resources. The technical solutions are as follows.

According to a first aspect, a multilevel storage-based data read/write method is provided, and is applied to a multilevel storage, where each level of storage in the multilevel storage includes at least one independent storage unit, and the method includes:

In the multilevel storage, in response to a level-(k+1) write-back request sent by a level-k storage for a first address, a level-(k+1) storage first performs a reduce operation on data in a plurality of cache lines, corresponding to the first address, in the level-k storage, and then writes a result of the reduce operation into the level-(k+1) storage, where k is an integer greater than or equal to 1.

The level-k storage in the multilevel storage may be any one of storage types such as a cache (cache), a main memory (main memory), a phase-change memory (phase-change memory, PCM), and a solid-state drive (solid-state drive, SSD). The cache may be a multilevel cache. For example, the cache is a three-level cache, including a level-1 cache L1 cache, a level-2 cache L2 cache, and a level-3 cache L3 cache. This is not limited in embodiments of this application. The storage unit in each level of storage is a storage device of a storage type of the level of storage. For example, if a storage type of the level-k storage in the multilevel storage is a cache, an independent storage unit in the level-k storage is an independent cache. For another example, if a storage type of the level-k storage in the multilevel storage is a solid-state drive, an independent storage unit in the level-k storage is a solid-state drive.

In the multilevel storage, a capacity of the level-k storage is less than a capacity of the level-(k+1) storage, and read/write efficiency of the level-k storage is higher than read/write efficiency of the level-(k+1) storage. The multilevel storage writes data in a level-by-level write-back mode to improve data write efficiency. Level-by-level writing back means that data is first written into an upper-level storage, and then written from the upper-level storage to a lower-level storage level by level. The multilevel storage reads data in a level-by-level read mode to improve data read efficiency. Level-by-level reading means that data is first read from an upper-level storage. If the data does not exist in the upper-level storage, the data is read level by level from a lower-level storage until the data is read. The data is read back to the upper-level storage level by level from a storage in which the data is located, to help improve efficiency of reading the data next time.

Statuses of the plurality of cache lines, corresponding to the first address, in the level-k storage are pending-reduce states. In the multilevel storage, in a pending-reduce state, there may be a plurality of cache lines corresponding to a same address, and data in the cache lines in the pending-reduce state is valid, has not been reduced, and cannot be read by using a read request.

The multilevel storage performs a reduce operation on data level by level, to obtain a final result of the reduce operation. The first address is a destination address of the final result of the reduce operation. For example, if the final result of the reduce operation needs to be stored in a main memory, the destination address of the final result of the reduce operation is a main memory address. In other words, the first address is a main memory address.

In the foregoing method, a reduce capability is offloaded from a processor core to the multilevel storage. The multilevel storage performs a reduce operation process, and integrates the reduce operation into a data write-back process between multiple levels of storages, so that the processor core can be more used to perform computing, thereby improving utilization of a computing capability of the processor core. In addition, because the reduce operation process is no longer performed by the processor core, the reduce operation process can be performed in parallel with a computational process performed by the processor core, thereby shortening completion time of a compute task, and improving completion efficiency of the compute task.

Optionally, that the level-k storage sends the level-(k+1) write-back request to the level-(k+1) storage includes:
When k is equal to 1, in response to a level-1 write-back request sent by the processor core, a storage unit in a level-1 storage sends a level-2 write-back request to a storage unit in a level-2 storage, where the level-1 write-back request carries the first address. When k is greater than or equal to 2, after the storage unit in the level-k storage completes a reduce operation indicated by a level-k write-back request, the storage unit in the level-k storage sends the level-(k+1) write-back request to a storage unit in the level-(k+1) storage.

The processor core sends the level-1 write-back request to a storage unit that can be accessed by the processor core in the level-1 storage. When the level-(k+1) storage includes a plurality of independent storage units, a first storage unit in the level-k storage sends the level-(k+1) write-back request to a second storage unit in the level-(k+1) storage, where the second storage unit is a storage unit that can be accessed by the first storage unit in the level-k storage. For example, the multilevel storage is a two-level storage, a level-1 storage is a level-1 cache in a cache, including an L1 cache 1 and an L1 cache 2, a level-2 storage is a level-2 cache in the cache, including an L2 cache 1 and an L2 cache 2, a processor core 1, the L1 cache 1, and the L2 cache 1 are located in a processor 1, a processor core 2, the L1 cache 2, and the L2 cache 2 are located in a processor 2, the processor core 1 can access the L1 cache 1, and the L1 cache 1 can access the L2 cache 1. In this case, the processor core 1 sends a level-1 write-back request to the L1 cache 1, and the L1 cache 1 sends a level-2 write-back request to the L2 cache 1.

Optionally, the method further includes:
In response to a write request for the level-k storage, the storage unit in the level-k storage determines a cache line corresponding to the first address from the storage unit in the level-k storage, where the write request carries the first address. If a status of the cache line corresponding to the first address is an invalid state or a shared state, the storage unit in the level-k storage writes to-be-written data corresponding to the write request into the cache line corresponding to the first address, and sets the status of the cache line corresponding to the first address to a pending-reduce state, where the invalid state indicates that data in the cache line is invalid, the shared state indicates that data in the cache line is valid and has not been reduced, and the pending-reduce state indicates that data in the cache line is valid and has not been reduced. If a status of the cache line corresponding to the first address is the pending-reduce state, the storage unit in the level-k storage writes the to-be-written data corresponding to the write request into the cache line corresponding to the first address.

Optionally, that in response to the write request for the level-k storage, the storage unit in the level-k storage determines the cache line corresponding to the first address from the storage unit in the level-k storage includes:
When k is equal to 1, in response to a data write request sent by the processor core, the storage unit in the level-1 storage determines the cache line corresponding to the first address from the storage unit in the level-1 storage, where to-be-written data corresponding to the data write request is data carried in the data write request. When k is greater than or equal to 2, in response to the level-k write-back request sent by a storage unit in a level-(k-1) storage, the storage unit in the level-k storage determines the cache line corresponding to the first address from the storage unit in the level-k storage, where to-be-written data corresponding to the level-k write-back request is a result of the reduce operation indicated by the level-k write-back request.

Optionally, when k is greater than or equal to 2, after the storage unit in the level-k storage writes the to-be-written data corresponding to the write request into the cache line corresponding to the first address, the method further includes:
The level-(k-1) storage sets a status of a cache line, corresponding to the first address, in the level-(k-1) storage to an invalid state.

Optionally, the method further includes:
The storage unit in the level-k storage receives a read request for the storage unit in the level-k storage, where the read request carries a second address. If a cache line corresponding to the second address exists in the storage unit in the level-k storage, and a status of the cache line corresponding to the second address is a shared state, the storage unit in the level-k storage reads data from the cache line corresponding to the second address, and returns the read data to the processor core. If a cache line corresponding to the second address exists in the storage unit in the level-k storage, and a status of the cache line corresponding to the second address is a pending-reduce state, when the status of the cache line corresponding to the second address becomes an invalid state, the storage unit in the level-k storage sends a read request to the storage unit in the level-(k+1) storage based on the second address, to read data corresponding to the second address, and returns the read data to the processor core. If a cache line corresponding to the second address does not exist in the storage unit in the level-k storage, the storage unit in the level-k storage sends a read request to the storage unit in the level-(k+1) storage based on the second address, to read data corresponding to the second address, and returns the read data to the processor core.

Optionally, the method further includes:
If the storage unit in the level-k storage reads the data corresponding to the second address from the storage unit in the level-(k+1) storage, the storage unit in the level-k storage determines a target cache line from the storage unit in the level-k storage, writes the read data into the target cache line, and sets a status of the target cache line to a shared state.

According to a second aspect, a multilevel storage-based data read/write method is provided, and is applied to a processor core, where the method includes:
The processor core computes an intermediate result of a parallel compute task of a target compute task. After the processor core obtains an i^{th} data block in a first intermediate result, the processor core sends a write-back request to a multilevel storage, to indicate the multilevel storage to perform a reduce operation on the i^{th} data block in the first intermediate result level by level, and write a final result of the reduce operation into a first address, where i is an integer greater than or equal to 1, and the i^{th} data block in the first intermediate result corresponds to the first address.

The data block means that data of a given scale is divided, and each group of data obtained through division is referred to as a data block. For example, a floating-point matrix with 4M rows×4N columns may be considered as data of a specific scale, and is divided every four rows and every four columns, to obtain M×N floating-point matrices with 4 rows×4 columns, where each floating-point matrix with 4 rows×4 columns can be referred to as a data block.

The final result of the reduce operation is a result obtained by performing, by a last-level storage in the multilevel storage, a reduce operation on a reduce operation result obtained by an upper-level storage, that is, the final result is an i^{th} data block in a compute result of the target compute task.

That the i^{th} data block in the first intermediate result corresponds to the first address means that a destination address of the final result of the reduce operation on the i^{th} data block in the first intermediate result is the first address. For example, the i^{th} data block in the first intermediate result is X, an i^{th} data block in a second intermediate result is Y, an i^{th} data block in a third intermediate result is W, an i^{th} data block in a fourth intermediate result is Z, a final result of a reduce operation on X is X+Y+W+Z, and a destination address of X+Y+W+Z is the first address. In this case, X, Y, Z, and W all correspond to the first address.

In the foregoing method, in a process of performing the target compute task, a computational process and a reduce process on an intermediate result are respectively performed by the processor core and the multilevel storage, and the processor core and the multilevel storage may perform the two processes in parallel. Therefore, the reduce process does not need to start to be performed only after the computational process is completed, that is, the computational process and the reduce process overlap in time, so that overall duration of the target compute task can be shortened, and completion efficiency of the target compute task can be improved. In addition, when the multilevel storage performs a reduce process on a former data block, the processor core can perform a computational process on a latter data block in parallel, thereby avoiding idleness of a computing capability of the processor core, and therefore improving utilization of the computing capability of the processor core.

Optionally, sending the write-back request to the multilevel storage after obtaining the i^{th} data block in the first intermediate result through computing includes:
each time n data blocks in the first intermediate result are obtained through computing, sending a write-back request for the n data blocks to the multilevel storage, where n is an integer greater than or equal to 1.

In the foregoing method, the processor core sends a write-back request for a plurality of data blocks to the multilevel storage only after obtaining the plurality of data blocks through computing, to indicate to perform a reduce operation on the plurality of data blocks level by level and write a final result of the reduce operation into the first address. In this way, a quantity of times that the processor core sends the write-back request can be reduced, so that the computing capability of the processor core can be more used for computing, thereby improving utilization of computational power of the processor core, further shortening the overall duration of the target compute task, and improving the completion efficiency of the target compute task.

Optionally, each level of storage in the multilevel storage includes at least one independent storage unit, and after the i^{th} data block in the first intermediate result is obtained through computing, the method further includes:
sending a data write request to a storage unit in a level-1 storage in the multilevel storage, where the data write request carries the first address and to-be-written data; the to-be-written data is the i^{th} data block in the first intermediate result; the data write request indicates the storage unit in the level-1 storage to write the to-be-written data into a cache line corresponding to the first address; after the to-be-written data is written into the cache line corresponding to the first address, a status of the cache line is a pending-reduce state; and the pending-reduce state indicates that data in the cache line is valid and has not been reduced.

Optionally, the method further includes:
sending a read request for a second address to the storage unit in the level-1 storage in the multilevel storage, to read data corresponding to the second address from the multilevel storage, where the data corresponding to the second address is a j^{th} data block in the compute result of the target compute task, and j is an integer greater than or equal to 1; receiving the data, corresponding to the second address, returned by the multilevel storage, and sending a read request for a third address to the multilevel storage, to read data corresponding to the third address from the multilevel storage, where the data corresponding to the third address is a (j+1)^{th} data block in the compute result; and after sending the read request for the third address to the multilevel storage, performing a next compute task of the target compute task based on the j^{th} data block in the compute result.

In the foregoing method, after the multilevel storage reads a data block in the compute result and sends the data block to the processor core, the processor core performs a next computational process based on the data block. At the same time, the multilevel storage performs a process of reading a next data block without waiting for completion of the computational process corresponding to the former data block, thereby shortening overall duration of a compute task and improving completion efficiency of the compute task.

According to a third aspect, a multilevel storage-based data read/write method is provided, where each level of storage in a multilevel storage includes at least one independent storage unit, and the method includes:
A processor core computes an i^{th} data block in a first intermediate result of a first parallel compute task, where i is an integer greater than or equal to 1, the i^{th} data block in the first intermediate result corresponds to a first address, and the first parallel compute task is used to compute a part of compute results in a target compute task.

The processor core sends a write-back request to the multilevel storage after obtaining the i^{th} data block in the first intermediate result through computing, where the write-back request indicates the multilevel storage to perform, level by level, a reduce operation on data in a plurality of cache lines, corresponding to the first address, in the multilevel storage, and write a final result of the reduce operation into the first address.

The processor core computes an (i+1)^{th} data block in the first intermediate result after sending the write-back request.

A level-k storage in the multilevel storage sends a level-(k+1) write-back request to a level-(k+1) storage in the multilevel storage while the processor core performs computing, where the level-(k+1) write-back request carries the first address, and k is an integer greater than or equal to 1.

In response to the level-(k+1) write-back request, the level-(k+1) storage performs a reduce operation on data in a plurality of cache lines, corresponding to the first address, in the level-k storage, and writes a result of the reduce operation into the level-(k+1) storage, where different cache lines in the plurality of cache lines correspond to different storage units in the level-k storage.

Optionally, that the level-k storage in the multilevel storage sends the level-(k+1) write-back request to the level-(k+1) storage includes:
When k is equal to 1, in response to a level-1 write-back request sent by the processor core, a storage unit in a level-1 storage sends a level-2 write-back request to a storage unit in a level-2 storage, where the level-1 write-back request carries the first address. When k is greater than or equal to 2, after the storage unit in the level-k storage completes a reduce operation indicated by a level-k write-back request, the storage unit in the level-k storage sends the level-(k+1) write-back request to a storage unit in the level-(k+1) storage.

Optionally, the method further includes:
In response to a write request for the level-k storage, the storage unit in the level-k storage determines a cache line corresponding to the first address from the storage unit in the level-k storage, where the write request carries the first address. If a status of the cache line corresponding to the first address is an invalid state or a shared state, the storage unit in the level-k storage writes to-be-written data corresponding to the write request into the cache line corresponding to the first address, and sets the status of the cache line corresponding to the first address to a pending-reduce state, where the invalid state indicates that data in the cache line is invalid, the shared state indicates that data in the cache line is valid and readable, and the pending-reduce state indicates that data in the cache line is valid and has not been reduced. If a status of the cache line corresponding to the first address is the pending-reduce state, the storage unit in the level-k storage writes the to-be-written data corresponding to the write request into the cache line corresponding to the first address.

Optionally, that in response to the write request for the level-k storage, the storage unit in the level-k storage determines the cache line corresponding to the first address from the storage unit in the level-k storage includes:
When k is equal to 1, in response to a data write request sent by the processor core, the storage unit in the level-1 storage determines the cache line corresponding to the first address from the storage unit in the level-1 storage, where to-be-written data corresponding to the data write request is data carried in the data write request. When k is greater than or equal to 2, in response to the level-k write-back request sent by a storage unit in a level-(k-1) storage, the storage unit in the level-k storage determines the cache line corresponding to the first address from the storage unit in the level-k storage, where to-be-written data corresponding to the level-k write-back request is a result of the reduce operation indicated by the level-k write-back request.

Optionally, when k is greater than or equal to 2, after the storage unit in the level-k storage writes the to-be-written data corresponding to the write request into the cache line corresponding to the first address, the method further includes:
The level-(k-1) storage sets a status of a cache line, corresponding to the first address, in the level-(k-1) storage to an invalid state.

Optionally, the method further includes:
The storage unit in the level-k storage receives a read request for the storage unit in the level-k storage, where the read request carries a second address. If a cache line corresponding to the second address exists in the storage unit in the level-k storage, and a status of the cache line corresponding to the second address is a shared state, the storage unit in the level-k storage reads data from the cache line corresponding to the second address, and returns the read data to the processor core. If a cache line corresponding to the second address exists in the storage unit in the level-k storage, and a status of the cache line corresponding to the second address is a pending-reduce state, when the status of the cache line corresponding to the second address becomes an invalid state, the storage unit in the level-k storage sends a read request to the storage unit in the level-(k+1) storage based on the second address, to read data corresponding to the second address, and returns the read data to the processor core. If a cache line corresponding to the second address does not exist in the storage unit in the level-k storage, the storage unit in the level-k storage sends a read request to the storage unit in the level-(k+1) storage based on the second address, to read data corresponding to the second address, and returns the read data to the processor core.

Optionally, the method further includes:
If the storage unit in the level-k storage reads the data corresponding to the second address from the storage unit in the level-(k+1) storage, the storage unit in the level-k storage determines a target cache line from the storage unit in the level-k storage, writes the read data into the target cache line, and sets a status of the target cache line to a shared state.

Optionally, that the processor core sends the write-back request to the multilevel storage after obtaining the i^{th} data block in the first intermediate result through computing includes:
each time n data blocks in the first intermediate result are obtained through computing, sending a write-back request for the n data blocks to the multilevel storage, where n is an integer greater than or equal to 1.

Optionally, each level of storage in the multilevel storage includes at least one independent storage unit, and after the i^{th} data block in the first intermediate result is obtained through computing, the method further includes:
sending the data write request to the storage unit in the level-1 storage in the multilevel storage, where the data write request carries the first address and the to-be-written data; the to-be-written data is the i^{th} data block in the first intermediate result; the data write request indicates the storage unit in the level-1 storage to write the to-be-written data into the cache line corresponding to the first address; and after the to-be-written data is written into the cache line corresponding to the first address, a status of the cache line is a pending-reduce state.

Optionally, the method further includes:
sending the read request for the second address to the storage unit in the level-1 storage in the multilevel storage, to read the data corresponding to the second address from the multilevel storage, where the data corresponding to the second address is a j^{th} data block in the compute result of the target compute task, and j is an integer greater than or equal to 1; receiving the data, corresponding to the second address, returned by the multilevel storage, and sending a read request for a third address to the multilevel storage, to read data corresponding to the third address from the multilevel storage, where the data corresponding to the third address is a (j+1)^{th} data block in the compute result; and after sending the read request for the third address to the multilevel storage, performing a next compute task of the target compute task based on the j^{th} data block in the compute result.

According to a fourth aspect, a multilevel storage-based data read/write apparatus is provided. The apparatus includes at least one functional module, and the at least one functional module is configured to perform the multilevel storage-based data read/write method provided in any one of the first aspect or the possible implementations of the first aspect.

According to a fifth aspect, a multilevel storage-based data read/write apparatus is provided. The apparatus includes at least one functional module, and the at least one functional module is configured to perform the multilevel storage-based data read/write method provided in any one of the second aspect or the possible implementations of the second aspect.

According to a sixth aspect, a multilevel storage is provided, where each level of storage in the multilevel storage includes at least one independent storage unit.

A level-k storage in the multilevel storage is configured to send a level-(k+1) write-back request to a level-(k+1) storage in the multilevel storage, where the level-(k+1) write-back request carries a first address, and k is an integer greater than or equal to 1.

The level-(k+1) storage is configured to: in response to the level-(k+1) write-back request, perform a reduce operation on data in a plurality of cache lines, corresponding to the first address, in the level-k storage, and write a result of the reduce operation into the level-(k+1) storage, where different cache lines in the plurality of cache lines correspond to different storage units in the level-k storage.

According to a seventh aspect, a processor is provided. The processor includes a multilevel storage and a plurality of processor cores. The multilevel storage is configured to implement steps performed by the multilevel storage in the multilevel storage-based data read/write method provided in any one of the third aspect or the optional manners of the third aspect. The processor core is configured to implement steps performed by the processor core in the multilevel storage-based data read/write method provided in any one of the third aspect or the optional manners of the third aspect.

According to an eighth aspect, a compute device is provided. The compute device includes a multilevel storage and a plurality of processor cores. The multilevel storage is configured to implement steps performed by the multilevel storage in the multilevel storage-based data read/write method provided in any one of the third aspect or the optional manners of the third aspect. The processor core is configured to implement steps performed by the processor core in the multilevel storage-based data read/write method provided in any one of the third aspect or the optional manners of the third aspect.

According to a ninth aspect, a distributed cluster is provided. The distributed cluster includes a multilevel storage and a plurality of processor cores. The multilevel storage is configured to implement steps performed by the multilevel storage in the multilevel storage-based data read/write method provided in any one of the third aspect or the optional manners of the third aspect. The processor core is configured to implement steps performed by the processor core in the multilevel storage-based data read/write method provided in any one of the third aspect or the optional manners of the third aspect.

According to a tenth aspect, a storage medium is provided. The storage medium is configured to store program code, and the program code is readable and executable by a multilevel storage, to implement the multilevel storage-based data read/write method provided in any one of the first aspect or the optional manners of the first aspect.

According to an eleventh aspect, a storage medium is provided. The storage medium is configured to store program code, and the program code is readable and executable by a processor core, to implement the multilevel storage-based data read/write method provided in any one of the second aspect or the optional manners of the second aspect.

In this application, on the basis of the implementations provided in the foregoing aspects, the implementations may be further combined to provide more implementations.

### BRIEF DESCRIPTION OF DRAWINGS

FIG. 1 is a diagram of a structure of a compute device according to an embodiment of this application;
FIG. 2 is a diagram of a pending-reduce state according to an embodiment of this application;
FIG. 3 is a schematic flowchart of a data write process in a multilevel storage-based data read/write method according to an embodiment of this application;
FIG. 4 is a diagram of request sending and state transition processes in a storage protocol according to an embodiment of this application;
FIG. 5 is a flowchart of data write and reduce processes in a multilevel storage-based data read/write method according to an embodiment of this application;
FIG. 6 is a schematic flowchart of data write and reduce processes in a multilevel storage-based data read/write method according to an embodiment of this application;
FIG. 7 is a flowchart of data write and reduce processes in a multilevel storage-based data read/write method according to an embodiment of this application;
FIG. 8 is a schematic flowchart of data write and reduce processes in a multilevel storage-based data read/write method according to an embodiment of this application;
FIG. 9 is a schematic flowchart of data write and reduce processes in a multilevel storage-based data read/write method according to an embodiment of this application;
FIG. 10 is a flowchart of data write and reduce processes in a multilevel storage-based data read/write method according to an embodiment of this application;
FIG. 11 is a flowchart of a data read process in a multilevel storage-based data read/write method according to an embodiment of this application;
FIG. 12 is a schematic flowchart of a data read process in a multilevel storage-based data read/write method according to an embodiment of this application;
FIG. 13 is a schematic flowchart of a data read process in a multilevel storage-based data read/write method according to an embodiment of this application;
FIG. 14 is a schematic flowchart of a multilevel storage-based data read/write method according to an embodiment of this application;
FIG. 15 is a diagram of a structure of a multilevel storage-based data read/write apparatus according to an embodiment of this application;
FIG. 16 is a diagram of a structure of a multilevel storage-based data read/write apparatus according to an embodiment of this application;
FIG. 17 is a diagram of a structure of a compute device according to an embodiment of this application;
FIG. 18 is a diagram of a structure of a distributed cluster according to an embodiment of this application; and
FIG. 19 is a diagram of a structure of a distributed cluster according to an embodiment of this application.

### DESCRIPTION OF EMBODIMENTS

To make objectives, technical solutions, and advantages of this application clearer, the following further describes implementations of this application in detail with reference to the accompanying drawings.

**First, an implementation environment of this application is described.**

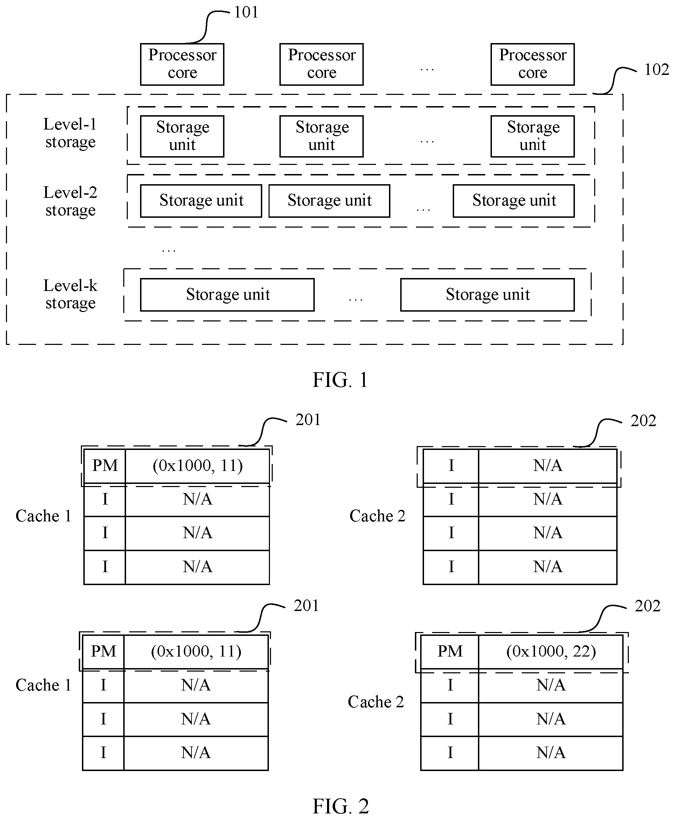

FIG. 1 is a diagram of a structure of a compute device according to an embodiment of this application. As shown in FIG. 1, the compute device includes processor cores 101 and a multilevel storage 102. Each level of storage in the multilevel storage 102 includes at least one independent storage unit.

The compute device includes one or more processors, and the plurality of processor cores 101 may be distributed in one processor of the compute device, or may be distributed in a plurality of processors of the compute device. This is not limited in embodiments of this application. In some embodiments, the multilevel storage 102 is a multilevel cache in the processor in the compute device. Each level of storage in the multilevel storage is in one-to-one correspondence with each level of cache in the multilevel cache, a quantity of storage units included in a level-k storage is equal to a quantity of caches (caches) included in a level-k cache, and k is an integer greater than or equal to 1. For example, a level-1 storage in the multilevel storage corresponds to a level-1 cache in the processor, the level-1 cache includes a plurality of L1 caches, and a quantity of storage units included in the level-1 storage is equal to a quantity of the L1 caches in the level-1 cache.

In some other embodiments, the multilevel storage 102 includes a multilevel cache in the compute device and a main memory in the compute device. For example, each processor in the compute device includes a three-level cache. In this case, a level-1 cache in each processor in the compute device corresponds to the level-1 storage in the multilevel storage 102, a level-2 cache in each processor in the compute device corresponds to a level-2 storage in the multilevel storage 102, a level-3 cache in each processor in the compute device corresponds to a level-3 storage in the multilevel storage 102, and the main memory in the compute device corresponds to a level-4 storage in the multilevel storage 102. It should be noted that the foregoing example is described by using an example in which the processor includes the three-level cache. Persons skilled in the art may know that the processor may alternatively include a two-level cache, a one-level cache, or the like. A level of the cache in the processor is not limited in embodiments of this application. In some embodiments, the compute device further includes a solid-state drive (solid-state drive, SSD). In this case, the solid-state drive is a level-5 storage in the multilevel storage 102. Persons skilled in the art may know that the compute device may further include another type of storage, and the another type of storage can be used as one or more levels in the multilevel storage 102. This is not limited in embodiments of this application.

The processor in the foregoing implementation environment may be a general-purpose central processing unit (central processing unit, CPU), a graphics processing unit (graphics processing unit, GPU), a switching module processor unit (switching module processor unit, SMPU), a network processor (network processor, NP), or a microprocessor, or may be one or more integrated circuits configured to implement the solutions of this application, for example, an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof. A type of the processor is not limited in embodiments of this application.

The processor core 101 provides a computing function, and is configured to perform a compute task. For example, the plurality of processor cores 101 can perform the compute task to obtain a compute result, and send a data write request for the compute result to the multilevel storage 102. The multilevel storage 102 stores the compute result. In some embodiments, the plurality of processor cores 101 can perform a target compute task in parallel, and each processor core 101 performs one parallel compute task in the target compute task. For example, the plurality of processor cores 101 can perform a parameter compute task of a target layer in a model in parallel, and each processor core 101 performs a compute task of a part of parameters of the target layer. It should be noted that that the target compute task is described above by using parameter computing of the target layer in the model is merely an example. Persons skilled in the art may know that the plurality of processor cores 101 can further perform other parallel compute tasks based on actual requirements. The parallel compute task is not limited in embodiments of this application.

The multilevel storage 102 provides a storage function and a reduce function. For example, each storage unit in each level of storage in the multilevel storage 102 includes a storage medium and an agent. The storage medium is configured to store data, that is, provide a storage function. The agent is configured to: perform a read/write operation and a reduce operation on data in a storage medium of an upper-level storage, to reduce the data in the upper-level storage, and store a reduce result in a storage medium of a current-level storage, that is, provide a reduce function. For example, when the level-k storage is a cache, a storage unit in the level-k storage is a cache, and the cache includes a storage medium and an agent. In some embodiments, the agent in the cache is referred to as a cache agent (cache agent, CA). When a level-k storage is a main memory, a storage unit in the level-k storage is a main memory, and the main memory includes a storage medium and an agent. In some embodiments, the agent in the main memory is referred to as a home agent (home agent, HA). A name of the agent is not limited in embodiments of this application.

Each storage unit in the multilevel storage 102 includes a plurality of cache lines. Each cache line includes stored data, a destination address corresponding to the stored data, and a cache line status. A data amount corresponding to each cache line is determined based on a storage medium. The cache line status is specified in a storage protocol used by the level of storage, and the cache line status indicates validity and a read/write rule of the data stored in the cache line. In embodiments of this application, the storage protocol used by the multilevel storage 102 and the cache line status specified in the storage protocol are described subsequently. Details are not described herein.

It should be noted that FIG. 1 is described by using an example in which the implementation environment is the compute device. In some embodiments, the implementation environment is a distributed cluster, and the distributed cluster includes a plurality of processor cores and a multilevel storage. The distributed cluster includes a plurality of processors, each processor includes one or more processor cores, and the plurality of processors may be distributed in one compute device, or may be distributed in a plurality of compute devices. This is not limited in embodiments of this application. The multilevel storage includes a multilevel cache in the compute device and a main memory in the compute device in the distributed cluster. For example, each processor includes a three-level cache, a level-1 cache in a processor in each compute device in the distributed cluster corresponds to a level-1 storage in the multilevel storage, a level-2 cache in the processor of each compute device in the distributed cluster corresponds to a level-2 storage in the multilevel storage, a level-3 cache in the processor of each compute device in the distributed cluster corresponds to a level-3 storage in the multilevel storage, and a main memory in each compute device in the distributed cluster corresponds to a level-4 storage in the multilevel storage. In some embodiments, the distributed cluster further includes an SSD. In this case, the SSD is a level-5 storage in the multilevel storage. Persons skilled in the art may know that the distributed cluster may further include another type of storage, and the another type of storage can be used as one or more levels in the multilevel storage. This is not limited in embodiments of this application.

When the implementation environment is the distributed cluster, the distributed cluster supports unified physical addressing, and the distributed cluster may be a single-node multi-device, a single-rack multi-server, a tightly coupled cluster using a disaggregated memory (disaggregated memory), a multi-rack cluster (also referred to as a SuperPoD) connected by supporting a cache coherence bus protocol, or the like. A plurality of processors in the distributed cluster can perform mutual memory access. In some embodiments, the plurality of processors meet a non-uniform memory access (non-uniform memory access, NUMA) architecture. When a destination address of a read/write request sent by a processor core in any processor is not a local main memory address of the processor, the processor sends, through a link, a read/write request to a main memory to which the destination address belongs, to perform reading/writing on the main memory to which the destination address belongs. The link is an interconnection architecture that supports cache coherence, for example, an ultra path interconnect (ultra path interconnect, UPI), an asymmetric cache coherence bus (compute express link, CXL), a coherent acceleration processor interface (coherent acceleration processor interface, CCIX), an open coherent accelerator processor interface (open coherent accelerator processor interface, OpenCAPI), or a generation Z (generation Z, Gen-Z). This is not limited in embodiments of this application.

Embodiments of this application provide a multilevel storage-based data read/write method. In the method, in a multilevel storage, in response to a level-(k+1) write-back request sent by a level-k storage for a first address, a level-(k+1) storage first performs a reduce operation on data in a plurality of cache lines, corresponding to the first address, in the level-k storage, and then writes a result of the reduce operation into the level-(k+1) storage, where k is an integer greater than or equal to 1. In the foregoing method, a reduce capability is offloaded from a processor core to the multilevel storage. The multilevel storage performs a reduce operation process, and integrates the reduce operation into a data write-back process between multiple levels of storages, so that the processor core can be more used to perform computing, thereby improving utilization of a computing capability of the processor core. In addition, because the reduce operation process is no longer performed by the processor core, the reduce operation process can be performed in parallel with a computational process performed by the processor core, thereby shortening completion time of a compute task, and improving completion efficiency of the compute task.

The foregoing method may be applied to a scenario in which a plurality of processor cores perform parallel compute tasks. In this scenario, each processor core computes an intermediate result of one parallel compute task. After the processor core obtains an i^{th} data block in a first intermediate result (i is an integer greater than or equal to 1, and the i^{th} data block in the first intermediate result corresponds to the first address), the processor core sends a write-back request to the multilevel storage, to indicate the multilevel storage to perform, level by level, a reduce operation on the i^{th} data block in the first intermediate result and an i^{th} data block in an intermediate result obtained by computing by another processor core (the i^{th} data block in the intermediate result obtained by computing by the another processor core also corresponds to the first address), and write a final result of the reduce operation into the first address. In the foregoing method, in a process of performing a target compute task, a computational process and a reduce process on an intermediate result are respectively performed by the processor core and the multilevel storage, and the processor core and the multilevel storage may perform the two processes in parallel. Therefore, the reduce process does not need to start to be performed only after the computational process is completed, that is, the computational process and the reduce process overlap in time, so that overall duration of the target compute task can be shortened. In addition, when the multilevel storage performs a reduce process on a former data block, the processor core can perform a computational process on a latter data block in parallel, thereby avoiding idleness of a computing capability of the processor core, and therefore improving utilization of the computing capability of the processor core.

In some embodiments, the foregoing parallel computing scenario is a scenario in which distributed training is performed on a model. In this scenario, a plurality of processor cores in a distributed cluster separately compute a part of parameters of a target layer in the model, to respectively obtain a plurality of intermediate results corresponding to the target layer. A reduce operation is performed on a corresponding data block in an intermediate result obtained by each processor core, to obtain a compute result of the target layer, and then parameter computing of a next layer of the target layer is performed based on the compute result of the target layer. In addition to the foregoing distributed model training scenario, the foregoing method may be further applied to another parallel computing scenario. This is not limited in embodiments of this application.

The foregoing method relates to a data exchange process between multiple levels of storages. Embodiments of this application provide a storage protocol. The storage protocol may be referred to as a unified memory-based parallel cache coherence protocol. A name of the storage protocol is not limited in embodiments of this application. In the multilevel storage, each level of storage exchanges data according to the storage protocol. The following first describes the storage protocol.

**First, a status of a cache line defined in the storage protocol is described.**

PM (pending-reduce state): Data in the cache line is valid and has not been reduced. In the multilevel storage, in the pending-reduce state, there may be a plurality of cache lines corresponding to a same address, and data in the cache lines in the pending-reduce state cannot be read by using a read request. The following describes the pending-reduce state by using an example with reference to FIG. 2. FIG. 2 is a diagram of a pending-reduce state according to an embodiment of this application. As shown in FIG. 2, a processor core 1 writes, by using PrWrNodata (data write request), data 11 into a cache line 201, corresponding to an address 0x1000, in a cache 1. After the data 11 is written, a status of the cache line 201 is a pending-reduce state. A processor core 2 writes, by using PrWrNodata, data 22 into a cache line 202, corresponding to the address 0x1000, in a cache 2. After the data 22 is written, a status of the cache line 202 is a pending-reduce state. The status of the cache line 201 is also the pending-reduce state, and data in both the cache line 201 and the cache line 202 is valid, has not been reduced, and cannot be read, that is, in the pending-reduce state, there may be a plurality of cache lines corresponding to a same address. It should be noted that, in a storage protocol used in a conventional technology, the processor core 1 writes the data 11 into the cache line 201, corresponding to the address 0x1000, in the cache 1, and after the processor core 2 writes the data 22 into the cache line 202, corresponding to the address 0x1000, in the cache 2, the status of the cache line 201 changes to I (invalid state), and the data 11 in the cache line 201 is invalid, that is, in the storage protocol used in the conventional technology, there cannot be a plurality of cache lines corresponding to a same address. Therefore, in the conventional technology, a lower-level storage cannot perform a reduce operation on data in a plurality of cache lines, corresponding to a same address, in an upper-level storage. PrWrNodata is described below, and details are not described herein.

S (shared state): Data in the cache line is valid and can be read.

I (invalid state): Data in the cache line is invalid.

**The following describes a request defined in the storage protocol.**

PrWrNodata (data write request): is sent by a processor core to a storage unit in a level-1 storage. The data write request carries to-be-written data and a destination address, and indicates to write the carried data into the destination address, and original data does not need to be read back from the destination address before the writing. After receiving the data write request, the storage unit in the level-1 storage writes the data carried in the data write request into a cache line corresponding to the destination address, where a status of the cache line after the data is written into the cache line is a pending-reduce state.

PrWr (data write request with read): is sent by the processor core to the storage unit in the level-1 storage. The data write request carries to-be-written data and a destination address, and indicates to write the carried data into the destination address, and original data in a cache line corresponding to the destination address needs to be read back from a lower-level storage before the writing. After receiving the data write request with read, the storage unit in the level-1 storage sends a read request for the original data to a level-2 storage, to obtain the original data, and writes the original data into a cache line, corresponding to an address of the original data in the lower-level storage, in the storage unit. Then, the storage unit in the level-1 storage writes the data carried in the data write request with read into a cache line, corresponding to a main memory address, in the storage unit, where a status of the cache line after the data is written into the cache line is a pending-reduce state.

BusWrNodata (cache coherence request): is generated with PrWrNodata. For example, when (address 1, data 1) is written into the storage unit in the level-1 storage by using PrWrNodata, the storage unit generates BusWrNodata, and sends BusWrNodata to another storage unit in the level-1 storage. After the another storage unit receives BusWrNodata, if a status of a cache line, corresponding to the address 1, in the storage unit is a shared state, the storage unit modifies the status of the cache line to an invalid state.

ReducePM (level-k write-back request, where k is equal to 1): is sent by the processor core to the storage unit in the level-1 storage. The level-1 write-back request carries a destination address, a quantity of cache lines that the level-1 write-back request is specific for, and a reduce operation type. The storage unit in the level-1 storage receives a level-2 write-back request sent to a storage unit in the level-2 storage, to perform, level by level, a reduce operation on data in a plurality of cache lines, corresponding to the destination address, in the level-1 storage. The reduce operation type may be INT8, FP16, or FP32 addition, or the like. The reduce operation type is not limited in embodiments of this application. After receiving the level-1 write-back request, the storage unit in the level-1 storage generates the level-2 write-back request based on the destination address, the quantity of cache lines that the level-1 write-back request is specific for, and the reduce operation type, and sends the level-2 write-back request to the storage unit in the level-2 storage. After the storage unit in the level-2 storage completes a reduce operation corresponding to the level-2 write-back request, the storage unit in the level-1 storage modifies statuses of the cache lines, corresponding to the destination address, in the storage unit in the level-1 storage to invalid states.

ReduceWb (level-k write-back request, where k is greater than or equal to 2): is sent by a storage unit in a level-(k-1) storage to a storage unit in a level-k storage. The level-k write-back request carries a destination address and a reduce operation type, and indicates the level-k storage to perform a reduce operation on data in a plurality of cache lines, corresponding to the destination address, in the level-(k-1) storage, and write a result of the reduce operation into the level-k storage. After receiving the level-k write-back request, the storage unit in the level-k storage obtains to-be-reduced data from the storage unit in the level-(k-1) storage, reduces the obtained data, and writes reduced data into a main memory address.

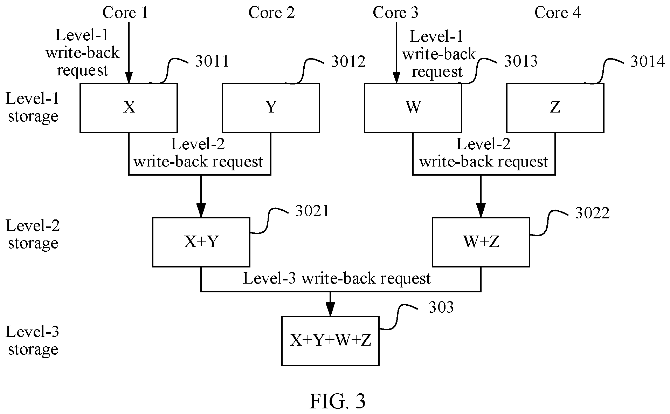

The following describes the level-k write-back request by using an example with reference to FIG. 3. FIG. 3 is a schematic flowchart of a data write process in a multilevel storage-based data read/write method according to an embodiment of this application. As shown in FIG. 3, FIG. 3 includes four processor cores (a core 1 to a core 4) and a multilevel storage. In the multilevel storage, a level-1 storage includes four storage units 3011 to 3014, and data X, Y, W, and Z are respectively stored in cache lines, corresponding to a destination address, in all the storage units; a level-2 storage includes two storage units 3021 and 3022; and a level-3 storage includes one storage unit 303. In response to a level-1 write-back request sent by the core 1, the storage unit 3011 in the level-1 storage sends a level-2 write-back request to the storage unit 3021 in the level-2 storage, where the level-2 write-back request carries the destination address. The storage unit 3021 in the level-2 storage obtains, from the storage units 3011 and 3012 in the level-1 storage, the data X and Y in cache lines corresponding to the destination address, performs a reduce operation on X and Y to obtain a result X+Y of the reduce operation, and stores X+Y in the storage unit 3021. A process in which the storage unit 3022 in the level-2 storage obtains W+Z and stores W+Z in the storage unit 3022 is similar to a process in which the storage unit 3021 obtains X+Y and stores X+Y in the storage unit 3021. Details are not described again. The storage unit 3021 in the level-2 storage sends a level-3 write-back request to the storage unit 303 in the level-3 storage, where the level-3 write-back request carries the destination address. The storage unit 303 in the level-3 storage obtains X+Y from the storage unit 3021 in the level-2 storage, obtains W+Z from the storage unit 3022 in the level-2 storage, performs a reduce operation on X+Y and W+Z to obtain a final result X+Y+W+Z of the reduce operation, and stores the final result X+Y+W+Z of the reduce operation in the storage unit 303 in the level-3 storage.

ReducePull (data obtaining request): is sent by a storage unit in a level-(k+1) storage in a processor to a storage unit in a level-k storage in another processor after a level-(k+1) write-back request is received, to obtain to-be-reduced data from the storage unit in the another processor. The data obtaining request carries a destination address, and is used to obtain data in a cache line corresponding to the destination address. After receiving the data obtaining request, the storage unit in the level-k storage obtains the data from the cache line corresponding to the destination address, and sends the obtained data to the storage unit in the level-(k+1) storage. After sending the data, the storage unit in the level-k storage modifies a status of the cache line corresponding to the destination address to an invalid state.

line is a pending-reduce state, when the status of the cache line becomes an invalid state, the storage unit in the level-k storage sends a read request to the storage unit in the level-(k+1) storage based on the destination address, to read the data corresponding to the destination address, and returns the read data to the processor core; and if a cache line corresponding to the destination address does not exist in the storage unit in the level-k storage, the storage unit in the level-k storage sends a read request to the storage unit in the level-(k+1) storage based on the destination address, to read the data corresponding to the destination address, and returns the read data to the processor core.

It should be noted that, to simplify the descriptions of embodiments of this application and highlight an implementation process of the multilevel storage-based data read/write method provided in embodiments of this application, a multilevel cache is collectively referred to as a cache below in embodiments of this application. An example in which the cache is the level-1 storage in the multilevel storage, a main memory is the level-2 storage in the multilevel storage, and data exchange is performed between the processor core, the cache, and the main memory is used to describe the method. This is not described below again. A process of data exchange between multiple levels of caches or a process of data exchange between the main memory and another storage (for example, a solid-state drive) is similar to a process of data exchange between the cache and the main memory. Details are not described again in embodiments of this application.

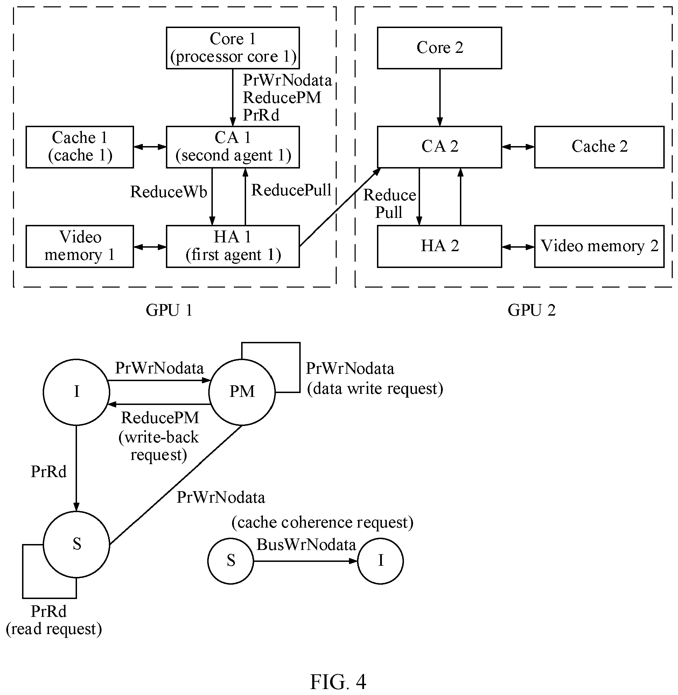

The following uses FIG. 4 as an example to describe processes of request sending and state transition of a corresponding cache line in the foregoing storage protocol. FIG. 4 is a diagram of request sending and state transition processes in a storage protocol according to an embodiment of this application. As shown in FIG. 4, the upper figure in FIG. 4 includes a GPU 1 and a GPU 2, the GPU 1 includes a core 1, a first agent 1 (HA 1), a cache 1, a second agent (CA 1), and a video memory 1, and the GPU 2 includes a core 2, a first agent 2 (HA 2), a cache 2, a second agent 2 (CA 2), and a video memory 2; and the lower figure in FIG. 4 includes a PM state, an S state, and an I state. It should be understood that, in FIG. 4, the CA 1 and the cache 1 form a storage unit in a level-1 storage, the CA 2 and the cache 2 form a storage unit in the level-1 storage, the HA 1 and the video memory 1 form a storage unit in a level-2 storage, and the HA 2 and the video memory 2 form a storage unit in the level-2 storage. The cache and the video memory provide a storage function, and the CA and the HA provide a data reduce function.

Data write process: The core 1 sends a PrWrNodata request to the CA 1, where the PrWrNodata request carries data 1 and a main memory address A. The CA 1 writes the data 1 carried in the PrWrNodata request into a cache line 1 in the cache 1, where the cache line 1 corresponds to the main memory address A. If a status of the cache line 1 before the data 1 is written into the cache line 1 is I or S, the CA 1 writes the data 1 into the cache line 1, and modifies the status of the cache line 1 to PM. If a status of the cache line 1 before the data 1 is written into the cache line 1 is PM, the CA 1 first writes back original data in the cache line 1 level by level, changes the status of the cache line 1 to I, then writes the data 1 into the cache line 1, and modifies the status of the cache line 1 from I to PM; and the CA 1 sends a BusWrNodata request to the CA 2 in the GPU 2, and the CA 2 modifies a status of a cache line 2 from S to I when the status of the cache line 2 is S, where the cache line 2 is a cache line, corresponding to the main memory address A, in the cache 2 in the GPU 2.

Process of reducing data level by level: The core 1 sends a ReducePM request for the main memory address A to the CA 1, and the CA 1 obtains the data 1 from the cache line 1 based on the main memory address A. The CA 1 sends a ReduceWb request to the HA 1, where the ReduceWb request carries the data 1 and the main memory address A. The HA 1 writes, based on the main memory address A, the data 1 carried in the ReduceWb request into the video memory 1, and sends a ReducePull request to the CA 2 in the GPU 2, where ReducePull carries the main memory address A (for example, the main memory address A corresponds to a main memory in the GPU 1). When data 2 has been written into the cache line 2 and a status of the cache line 2 is PM, the CA 2 sends the data 2 in the cache line 2 to the HA 1, and the CA 2 modifies the status of the cache line 2 from PM to I. After the HA 1 receives the data 2, the HA 1 reads the data 1 from the video memory 1 based on the main memory address A, performs a reduce operation on the data 1 and the data 2, and writes a result of the reduce operation into the main memory address A in the video memory 1. The HA 1 returns a completion response to the ReduceWb request to the CA 1. After receiving the completion response, the CA 1 modifies the status of the cache line 1 from PM to I.

Data read process: The core 1 sends a PrRd request to the CA 1, where the PrRd request carries the main memory address A. The CA 1 sends a read request for the main memory address A to the HA 1 (for example, the main memory address A corresponds to the main memory in the GPU 1). The HA 1 sends data (the result of the reduce operation) in the main memory address A to the CA 1. The CA 1 writes the data into a cache line, corresponding to the main memory address A, in the cache 1, modifies a status of the cache line to S, and sends the data to the core 1.

It should be noted that that a distributed cluster includes the GPU 1 and the GPU 2 in FIG. 4 is merely an example for description. Types and a quantity of processors in the distributed cluster are not limited in embodiments of this application.

The foregoing describes the storage protocol provided in embodiments of this application. The following uses a training process of a target layer in a model as an example to describe a specific procedure of the multilevel storage-based data read/write method provided in embodiments of this application.

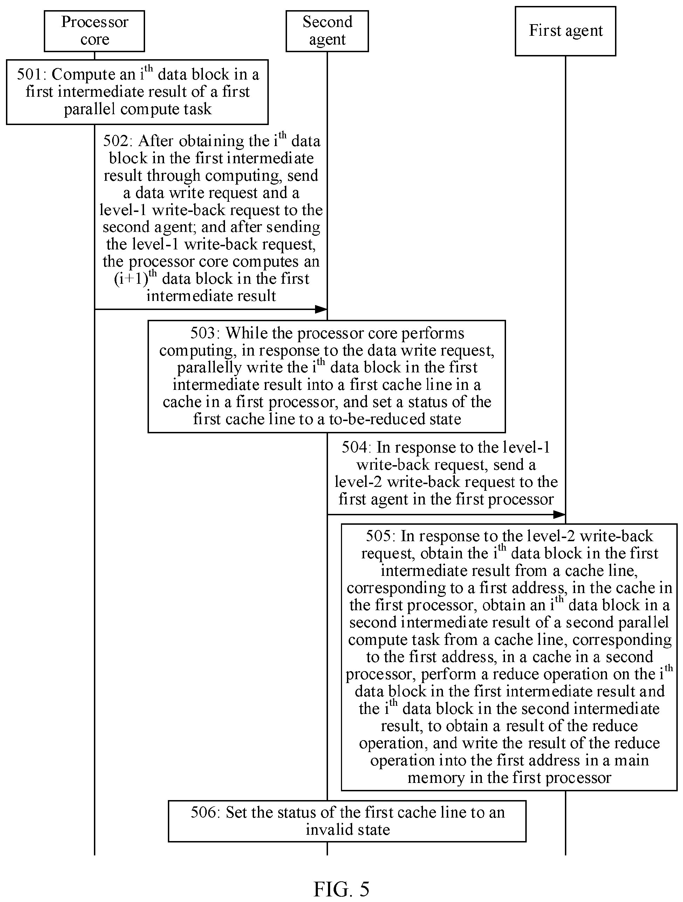

First, data write and reduce processes are described. FIG. 5 is a flowchart of data write and reduce processes in a multilevel storage-based data read/write method according to an embodiment of this application. As shown in FIG. 5, the method is applied to a first processor in a distributed cluster. The distributed cluster includes a plurality of processors, and the plurality of processors can perform mutual memory access. The first processor includes a processor core, a first agent, a second agent, a main memory, and a cache. The first agent in the first processor is configured to: receive a request for the main memory and perform a read/write operation on the main memory in the first processor. The second agent in the first processor is configured to: receive a request for the cache and perform a read/write operation on the cache in the first processor. The second agent and the cache in the first processor form a storage unit in a level-1 storage in a multilevel storage, and the first agent and the main memory in the first processor form a storage unit in a level-2 storage in the multilevel storage. The method includes the following step 501 to step 506.

**501: The processor core computes an i^{th} data block in a first intermediate result of a first parallel compute task, where i is an integer greater than or equal to 1, the i^{th} data block in the first intermediate compute result corresponds to a first address, and the first parallel compute task is used to compute a part of compute results in a target compute task.**

The first parallel compute task may be abstracted as multiplication of a first input submatrix and a first weight submatrix of a target layer in a model. The first input submatrix is obtained by performing row splitting on an input matrix of the target layer, and the first weight submatrix is obtained by performing column splitting on a weight matrix of the target layer, that is, tensor parallelism is performed on the target layer by using a row splitting method. For example, the input matrix of the target layer in the model is X, a scale of X is 1024×2048, the weight matrix of the target layer is A, a scale of A is 2048×1024, a compute result of the target layer is Y, Y=X·A, and a scale of Y is 1024×1024. Row splitting is performed on the input matrix X to obtain a first submatrix X1 and a second submatrix X2, where scales of X1 and X2 are 1024×1024, and column splitting is performed on the weight matrix A to obtain a first weight submatrix A1 and a second weight submatrix A2, where scales of A1 and A2 are 1024×1024. The first parallel compute task of the target layer is X1·A1=Y1, and a second parallel compute task is X2·A2=Y2, where the first parallel compute task is performed by the first processor, the second parallel compute task is performed by a second processor, Y1 is the first intermediate compute result, Y2 is a second intermediate compute result, scales of Y1 and Y2 are both 1024×1024 (the same as the scale of Y), and Y=Y1+Y2. It should be noted that the foregoing example of the first parallel compute task is merely an example, and does not limit a quantity of processors in the distributed cluster, scales of the input matrix and the weight matrix of the target layer, splitting results of the input matrix and the weight matrix, and the like. In addition, a splitting process may be completed by the first processor, or may be completed by another processor. The splitting process is not limited in embodiments of this application.

When computing data blocks in the first intermediate result, the processor core sequentially computes the data blocks in the first intermediate result. For example, after obtaining the i^{th} data block in the first intermediate result through computing, the processor core computes an (i+1)^{th} data block in the first intermediate result until all the data blocks in the first intermediate result are obtained.

**502: After obtaining the i^{th} data block in the first intermediate result through computing, the processor core sends a data write request and a level-1 write-back request to the second agent; and after sending the level-1 write-back request, the processor core computes the (i+1)^{th} data block in the first intermediate result, where the data write request indicates to write the i^{th} data block in the first intermediate result into the cache in the first processor, the level-1 write-back request indicates to send a level-2 write-back request to the first agent, and the level-2 write-back request indicates the first agent in the first processor to perform a reduce operation on data in a plurality of cache lines, corresponding to the first address, in the cache, and write a result of the reduce operation into the first address in the main memory in the first processor.**

The data write request carries the i^{th} data block in the first intermediate result and a main memory address. In some embodiments, a data amount of each data block in the first intermediate result is equal to an integer multiple of a capacity of one cache line in the cache in the first processor. The example in step 501 is still used as an example. The first intermediate result is represented by using a first intermediate result matrix, each element in the first intermediate compute result is a 2-byte half-precision floating-point number, the first intermediate compute result is divided into 16384 blocks (Z1, Z2, Z3, ..., Z16384) with a scale of 8×8, and each block is used as one data block in the first intermediate result. In this case, a data amount of each data block is 128 bytes, a capacity of one cache line in the cache is also 128 bytes, and the data amount of each data block is exactly equal to the capacity of the one cache line in the cache in the first processor. In the foregoing embodiment, the data amount of the data block in the first intermediate result is equal to the integer multiple of the capacity of the cache line in the cache, so that when the data block is written into the cache, each data block can exactly fill an integer quantity of cache lines, thereby avoiding a cache space waste problem caused by misalignment between the data amount of the data block and the capacity of the cache line.

The data write request is, for example, the foregoing PrWrNodata request or PrWr request, and the level-1 write-back request is, for example, the foregoing ReducePM request. The PrWrNodata request, the PrWr request, and the ReducePM request are not described herein again.

In some embodiments, a first address range in the main memory in the first processor is used as storage space of the compute result of the target layer, and the main memory address carried in the data write request corresponds to the first address range. The first address range is not limited in embodiments of this application.

It should be noted that step 502 is an implementation in which each time n data blocks in the first intermediate result are obtained through computing, a write-back request for the n data blocks is sent to the multilevel storage. In some embodiments, the process is alternatively implemented in another manner. This is not limited in embodiments of this application.

**503: While the processor core performs computing, in response to the data write request, the second agent parallelly writes the i^{th} data block in the first intermediate result into a first cache line in the cache in the first processor, and sets a status of the first cache line to a pending-reduce state, where the pending-reduce state indicates that data in the first cache line is valid and has not been reduced.**

In response to the data write request, the second agent determines the first cache line in the cache in the first processor based on the first address carried in the data write request, and writes the i^{th} data block in the first intermediate compute result into the first cache line.

In some embodiments, a cache line corresponding to the first address exists in the cache in the first processor, and the cache line is the first cache line. In this case, the second agent writes the i^{th} data block in the first intermediate result carried in the data write request into the first cache line.

In some other embodiments, a cache line corresponding to the first address does not exist in the cache in the first processor, and the cache in the first processor is not full. In this case, the second agent determines any cache line from a cache line whose status is I in the cache, and the determined cache line is the first cache line. The second agent writes the i^{th} data block in the first intermediate result into the first cache line, and after the writing, modifies the status of the first cache line from I to PM.

In still some other embodiments, a cache line corresponding to the first address does not exist in the cache in the first processor, and the cache in the first processor is full. In this case, the second agent determines the first cache line from the cache. If the status of the first cache line is I or S, the second agent directly writes the i^{th} data block in the first intermediate result into the first cache line, and after the writing, modifies the status of the first cache line to PM. If the status of the first cache line is PM, after the status of the first cache line is I, the second agent writes the i^{th} data block in the first intermediate result into the first cache line, and after the writing, modifies the status of the first cache line from I to PM. A method for determining the first cache line from the cache by the second agent includes: a least recently used (least recently used, LRU) algorithm, a first in first out (first in first out, FIFO) algorithm, a random replacement (RAND, rand) algorithm, and the like. The least recently used algorithm is used to determine, as the first cache line, a cache line that is least accessed in a recent period of time. The first in first out algorithm is used to determine, as the first cache line, a cache line that exists for the longest time. The random replacement algorithm is used to determine, as the first cache line, a cache line that is determined based on a random number. It should be noted that the foregoing three replacement algorithms are merely examples, and may be set based on an actual requirement. This is not limited in embodiments of this application.

It should be noted that step 502 and step 503 are an implementation in which a write-back request is sent to the multilevel storage after the i^{th} data block in the first intermediate result is obtained through computing, where the write-back request indicates the multilevel storage to perform, level by level, a reduce operation on data in a plurality of cache lines, corresponding to the first address, in the multilevel storage, and write a final result of the reduce operation into the first address. In some embodiments, the process is alternatively implemented in another manner. This is not limited in embodiments of this application.

**504: In response to the level-1 write-back request, the second agent sends the level-2 write-back request to the first agent in the first processor.**

The level-1 write-back request carries the i^{th} data block in the first intermediate result, the main memory address, and a reduce operation type. The reduce operation type may be INT8, FP16, or FP32 addition, or the like. The reduce operation type is not limited in embodiments of this application. The level-2 write-back request carries the first address and the reduce operation type. In response to the level-1 write-back request, the second agent sends the level-2 write-back request to the first agent in the first processor based on the first address and the reduce operation type.

The level-2 write-back request is, for example, the foregoing ReduceWb request. The ReduceWb request is not described herein again.

**505: In response to the level-2 write-back request, the first agent in the first processor obtains the i^{th} data block in the first intermediate result from the cache line, corresponding to the first address, in the cache in the first processor, obtains an i^{th} data block in the second intermediate result of the second parallel compute task from a cache line, corresponding to the first address, in a cache in the second processor, performs a reduce operation on the i^{th} data block in the first intermediate result and the i^{th} data block in the second intermediate result, to obtain a result of the reduce operation, and writes the result of the reduce operation into the first address in the main memory in the first processor, where the second parallel compute task is used to compute another part of parameters of the target layer.**

The first agent in the first processor is preconfigured with information about another processor in the distributed cluster, so that the first agent can send a data obtaining request to the another processor. Both the i^{th} data block in the first intermediate result and the i^{th} data block in the second intermediate result correspond to the first address in the first processor. In response to the level-2 write-back request, the first agent in the first processor separately obtains data blocks from cache lines, corresponding to the first address, in caches in other processors in the distributed cluster, where the obtained data blocks are i^{th} data blocks in intermediate results of other parallel compute tasks in the target compute task; then performs a reduce operation on the obtained data blocks and the i^{th} data block in the first intermediate result, to obtain a result of the reduce operation, where the result of the reduce operation is an i^{th} data block in the compute result of the target layer; and writes the result of the reduce operation into the main memory in the first processor. The process includes the following step 5051 to step 5053.

**5051: The first agent in the first processor sends a data obtaining request for the first address to the second agent in the second processor, where the data obtaining request is used to obtain a data block from the cache line, corresponding to the first address, in the cache in the second processor.**

The data obtaining request carries the first address. The data obtaining request is, for example, the foregoing ReducePull request. The ReducePull request is not described herein again.

In response to the data obtaining request, the second agent in the second processor determines, based on the first address, the cache line corresponding to the first address from the cache. If a status of the cache line is a pending-reduce state, the second agent in the second processor obtains data from the cache line, to obtain a data block corresponding to the first address.

**5052: The first agent in the first processor receives the data block, returned by the second agent in the second processor, in the cache line corresponding to the first address, to obtain the i^{th} data block in the first intermediate result.**

**5053: The first agent in the first processor performs a reduce operation on the i^{th} data block in the second intermediate result and the i^{th} data block in the first intermediate result, to obtain a result of the reduce operation, and writes the result of the reduce operation into the first address in the first processor.**

The first agent in the first processor performs, on the i^{th} data block in the second intermediate result and the i^{th} data block in the first intermediate compute result, the reduce operation specified in the level-2 write-back request. For example, if the reduce operation type carried in the level-2 write-back request is 32-bit single-precision floating-point number (FP32) addition, the first agent in the first processor performs an FP32 addition operation on the i^{th} data block in the second intermediate result and the i^{th} data block in the first intermediate result, to obtain a result of the reduce operation, that is, the i^{th} data block in the compute result of the target layer.

In some embodiments, in response to the level-2 write-back request, the first agent in the first processor first writes, based on the first address carried in the level-2 write-back request, the i^{th} data block in the first intermediate result carried in the level-2 write-back request into a first main memory address, and then sends the data obtaining request for the first address to the second agent in the second processor, to obtain the i^{th} data block in the second intermediate result from the cache in the second processor. After obtaining the i^{th} data block in the second intermediate result, the first agent in the first processor reads the i^{th} data block in the first intermediate result from the first address in the main memory in the first processor, and performs the reduce operation on the i^{th} data block in the first intermediate result and the i^{th} data block in the second intermediate result, to obtain the result of the reduce operation. The first agent in the first processor writes the result of the reduce operation into the first address in the main memory in the first processor.

It should be noted that step 505 is described by using an example in which the distributed cluster includes two processors (the first processor and the second processor). In some embodiments, the distributed cluster includes three or more processors. In response to the level-2 write-back request, the first agent in the first processor separately obtains, from caches in processors other than the first processor, data in cache lines corresponding to the first address, to obtain i^{th} data blocks of intermediate results of other parallel compute tasks of the target compute task, and performs a reduce operation on the plurality of obtained data blocks and the i^{th} data block in the first intermediate result, to obtain a result of the reduce operation. In some embodiments, each time one data block corresponding to the first address is obtained from a cache in another processor, the first agent in the first processor performs a reduce operation once until the reduce operation is performed on data in all of a plurality of cache lines corresponding to the first address. For example, the distributed cluster includes four processors: a processor 1, a processor 2, a processor 3, and a processor 4. In response to the level-2 write-back request, the processor 1 separately obtains, from caches in the processors 2, 3, and 4, data in a plurality of cache lines corresponding to the first address. After obtaining the i^{th} data block in the second intermediate result from the cache in the processor 2, the processor 1 performs a reduce operation on the i^{th} data block in the second intermediate result and the i^{th} data block in the first intermediate result, to obtain a first intermediate reduce result. After obtaining an i^{th} data block in a third intermediate result from the cache in the processor 3, the processor 1 performs a reduce operation on the i^{th} data block in the third intermediate result and the first intermediate reduce result, to obtain a second intermediate reduce result. After obtaining an i^{th} data block in a fourth intermediate result from the cache in the processor 4, the processor 1 performs a reduce operation on the i^{th} data block in the fourth intermediate result and the second intermediate reduce result, to obtain a result of the reduce operation, that is, the i^{th} data block in the compute result of the target layer.

It should be noted that step 504 and step 505 are an implementation in which when k is equal to 1, the storage unit in the level-1 storage sends the level-2 write-back request to the storage unit in the level-2 storage in response to the level-1 write-back request sent by the processor core, and when k is greater than or equal to 2, after a storage unit in a level-k storage completes a reduce operation indicated by a level-k write-back request, the storage unit in the level-k storage sends a level-(k+1) write-back request to a storage unit in a level-(k+1) storage. In some embodiments, the process is alternatively implemented in another manner. This is not limited in embodiments of this application.

**506: The second agent sets the status of the first cache line to an invalid state, where the invalid state indicates that data in the first cache line is invalid.**

It should be noted that step 506 is an optional step, and in some embodiments, step 506 is not performed.

It should be noted that step 506 is an implementation in which a level-(k-1) storage sets a status of a cache line, corresponding to the first address, in the level-(k-1) storage to an invalid state. In some embodiments, the process is alternatively implemented in another manner. This is not limited in embodiments of this application.

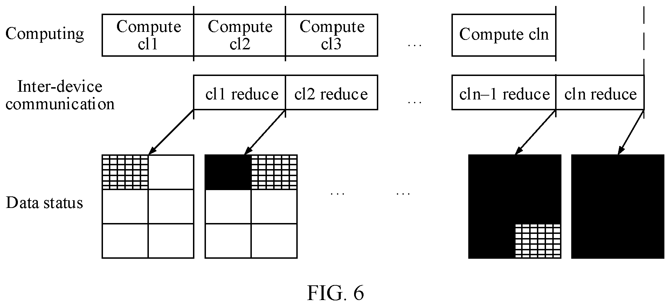

The following uses FIG. 6 as an example to describe the procedure shown in step 501 to step 506. FIG. 6 is a schematic flowchart of data write and reduce processes in a multilevel storage-based data read/write method according to an embodiment of this application. As shown in FIG. 6, the processor core sequentially computes cl1, cl2, cl3, ..., cln (cli corresponds to the i^{th} data block in the first intermediate result). After the processor core obtains cl1 through computing, the processor core performs inter-device communication with the first agent and the second agent, that is, the processor core sends a data write request for cl1, to write cl1 into a cache line in the cache, and modifies a status of the cache line to PM (in FIG. 6, grid filling indicates that a reduce operation has not been performed on a data block). After sending the data write request, the processor core sends a level-1 write-back request for cl1, to reduce cl1 level by level. During a reduce operation performed by the first agent and the second agent on cl1, the processor core computes cl2. After cl1 is reduced, a status of a cache line corresponding to cl1 is I (in FIG. 6, black filling indicates that a reduce operation has been performed), indicating that data in the cache line has been reduced, a result of the reduce operation has been written into the main memory, and the data in the cache line is invalid. cl2, cl3, ..., cln are similar to cl1. Details are not described again.

In the foregoing method, in a model training process, a computational process and a reduce process on an intermediate result of the target layer in the model are respectively performed by the processor core and the first agent in the processor, and the processor core and the first agent may perform the two processes in parallel. Therefore, the reduce process does not need to start to be performed only after the computational process is completed, that is, the computational process and the reduce process overlap in time, so that overall duration of model training can be shortened. In addition, when the first agent performs a reduce process on a former data block, the processor core can perform a computational process on a latter data block in parallel, thereby avoiding idleness of a computing capability of the processor core, and therefore improving utilization of computational power of the processor. In addition, the data amount of the data block in the first intermediate result is equal to the integer multiple of the capacity of the cache line in the cache, so that when the data block is written into the cache, each data block can exactly fill the integer quantity of cache lines, thereby avoiding the cache space waste problem caused by the misalignment between the data amount of the data block and the capacity of the cache line. In addition, hardware (the first agent and the second agent) in the processor completes cross-device data reducing, and a reduce process does not need to be configured or initiated by software, thereby reducing software stack overheads, and shortening data synchronization duration.

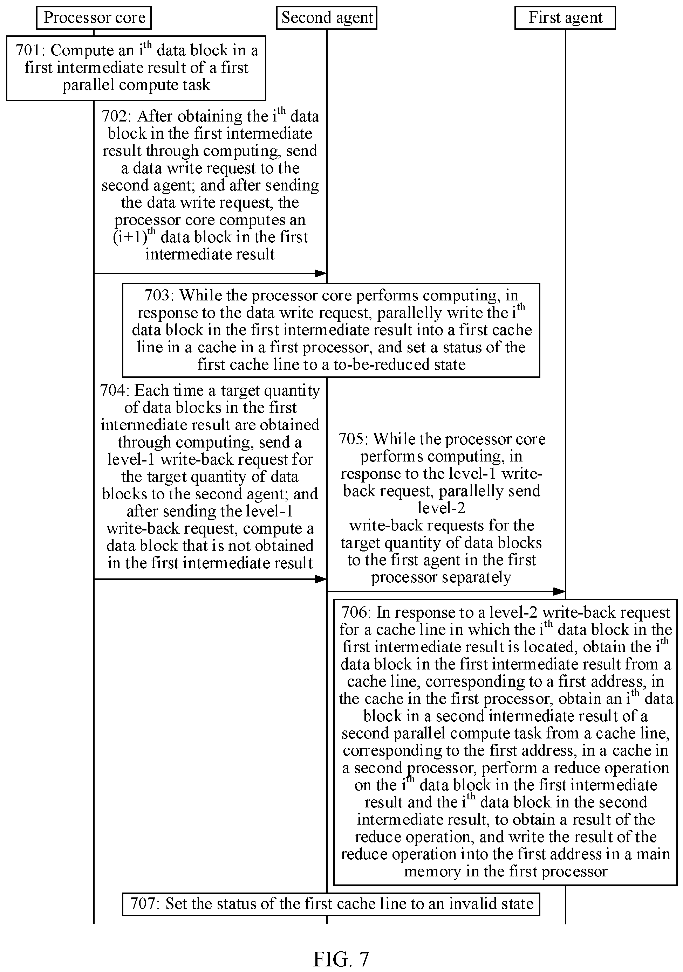

It should be noted that step 501 to step 506 are described by using an example in which each time one data block is obtained through computing, the processor core in the first processor sends a data write request and a write-back request for the data block to the second agent in the first processor. In some other embodiments, each time one data block is obtained through computing, the processor core sends a data write request for the data block to the second agent, and each time a quantity of data blocks obtained through computing reaches a target quantity, the processor core sends a write-back request for the target quantity of data blocks to the second agent. The following describes the process by using FIG. 7.

FIG. 7 is a flowchart of data write and reduce processes in a multilevel storage-based data read/write method according to an embodiment of this application. As shown in FIG. 7, the method is applied to a first processor in a distributed cluster. The distributed cluster includes a plurality of processors, and the plurality of processors can perform mutual memory access. The first processor includes a processor core, a first agent, a second agent, a main memory, and a cache. The first agent in the first processor is configured to: receive a request for the main memory and perform a read/write operation on the main memory in the first processor. The second agent in the first processor is configured to: receive a request for the cache and perform a read/write operation on the cache in the first processor. The second agent and the cache in the first processor form a storage unit in a level-1 storage in a multilevel storage, and the first agent and the main memory in the first processor form a storage unit in a level-2 storage in the multilevel storage. The method includes the following step 701 to step 707.

**701: The processor core computes an i^{th} data block in a first intermediate result of a first parallel compute task, where i is an integer greater than or equal to 1, and the i^{th} data block in the first intermediate result corresponds to a first address.**

Step 701 is similar to step 501. Details are not described again.

**702: After obtaining the i^{th} data block in the first intermediate result through computing, the processor core sends a data write request to the second agent; and after sending the data write request, the processor core computes an (i+1)^{th} data block in the first intermediate result.**

A process in which the processor core sends the data write request to the second agent is similar to the process in which the processor core sends the data write request to the second agent in step 502. A difference lies in that in step 702, after sending the data write request, the processor core computes the (i+1)^{th} data block in the first intermediate result. Similar content is not described again.

**703: While the processor core performs computing, in response to the data write request, the second agent parallelly writes the i^{th} data block in the first intermediate result into a first cache line in the cache in the first processor, and sets a status of the first cache line to a pending-reduce state.**

Step 703 is similar to step 503. Details are not described again.

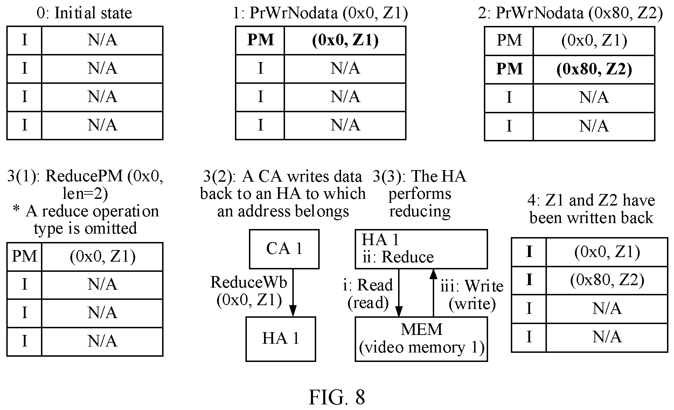

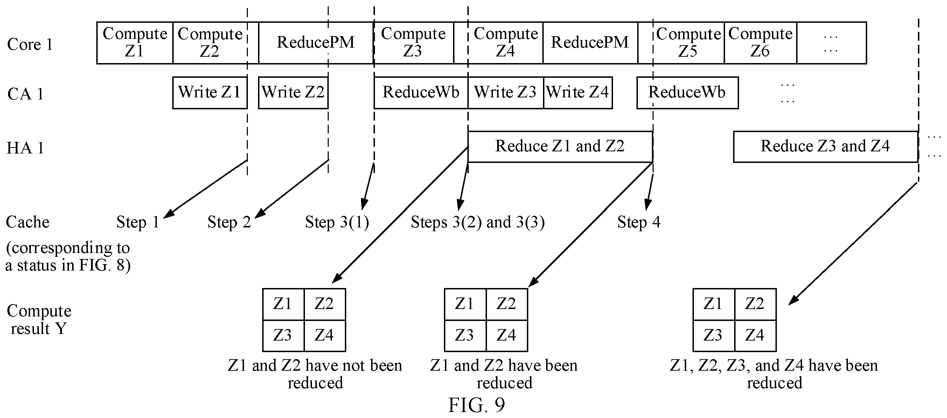

The example in step 502 is still used as an example, and step 701 to step 703 are described by using examples with reference to FIG. 8 and FIG. 9. FIG. 8 is a schematic flowchart of data write and reduce processes in a multilevel storage-based data read/write method according to an embodiment of this application. FIG. 9 is a schematic flowchart of data write and reduce processes in a multilevel storage-based data read/write method according to an embodiment of this application. As shown in step 0 in FIG. 8, in an initial state, a status of each cache line in the cache in the first processor is I. As shown in FIG. 9, the processor core first computes Z1. After obtaining Z1 through computing, the processor core sends a data write request (PrWrNodata) to a CA 1, where the data write request carries Z1 and a main memory address 0x0. In response to the data write request, the CA 1 writes Z1 into a cache line in the cache, and sets a status of the cache line to PM (corresponding to step 1 in FIG. 8). During data writing of the CA 1, the processor core continues to compute Z2.

**704: Each time a target quantity of data blocks in the first intermediate result are obtained through computing, the processor core sends a level-1 write-back request for the target quantity of data blocks to the second agent; and after sending the level-1 write-back request, the processor core computes a data block that is not obtained in the first intermediate result.**

The level-1 write-back request carries the first address, a quantity of cache lines that the level-1 write-back request is specific for (that is, the target quantity), and a reduce operation type. The target quantity may be set based on an actual requirement. The target quantity is not limited in embodiments of this application.

FIG. 8 and FIG. 9 are still used as examples to describe step 704. As shown in FIG. 8, after obtaining Z2 through computing, the processor core sends a data write request (PrWrNodata) to the CA 1, where the data write request carries Z2 and a main memory address 0x80. In response to the data write request, the CA 1 writes Z2 into a cache line in the cache, and sets a status of the cache line to PM (corresponding to step 2 in FIG. 8). After obtaining two data blocks (Z1 and Z2) through computing, the processor core sends a level-1 write-back request (ReducePM) for Z1 and Z2 to the CA 1, where the level-1 write-back request carries Z1, Z2, a start address 0x0 corresponding to the write-back request, a quantity 2 (len=2) of cache lines that the level-1 write-back request is specific for, and a reduce operation type (corresponding to step 3(1) in FIG. 8). After sending the level-1 write-back request, the processor core continues to compute Z3.

**705: While the processor core performs computing, in response to the level-1 write-back request, the second agent parallelly sends level-2 write-back requests for the target quantity of data blocks to the first agent in the first processor separately, where for a level-2 write-back request for the i^{th} data block in the first intermediate result, the first agent in the first processor performs a reduce operation on data in a plurality of cache lines, corresponding to the first address, in the cache, and writes a result of the reduce operation into the first address in the main memory in the first processor.**

That the second agent separately sends the level-2 write-back requests for the target quantity of data blocks to the first agent in the first processor means that the second agent sends a plurality of level-2 write-back requests to the first agent in the first processor for a plurality of cache lines in which the target quantity of data blocks are located. For example, the level-1 write-back request is for the i^{th} data block to an (i+x)^{th} (x is a positive integer) data block in the first intermediate result, and the x data blocks are written into x cache lines in the cache in the first processor. In this case, the second agent separately sends level-2 write-back requests for the x cache lines to the first agent in the first processor, to separately perform a reduce operation on the i^{th} data block, the (i+1)^{th} data block, ..., the (i+x)^{th} data block in the first intermediate compute result, and separately write results of the reduce operation into the main memory in the first processor.

FIG. 8 and FIG. 9 are still used as examples to describe step 705. As shown in FIG. 9, in response to the level-1 write-back request (ReducePM) for Z1 and Z2, the CA 1 separately sends, to an HA, level-2 write-back requests (ReduceWb) for cache lines in which Z1 and Z2 are located, where a level-2 write-back request for a cache line in which Z1 is located carries Z1 and the main memory address 0x0 (corresponding to step 3(2) in FIG. 8), and a level-2 write-back request for a cache line in which Z2 is located carries Z2 and the main memory address 0x80.

It should be noted that step 705 is an implementation in which each time n data blocks in the first intermediate result are obtained through computing, a write-back request for the n data blocks is sent to the multilevel storage. In some embodiments, the process is alternatively implemented in another manner. This is not limited in embodiments of this application.

**706: In response to a level-2 write-back request for a cache line in which the i^{th} data block in the first intermediate result is located, the first agent obtains the i^{th} data block in the first intermediate result from the cache line, corresponding to the first address, in the cache in the first processor, obtains an i^{th} data block in a second intermediate result of a second parallel compute task from a cache line, corresponding to the first address, in a cache in a second processor, performs a reduce operation on the i^{th} data block in the first intermediate result and the i^{th} data block in the second intermediate result, to obtain a result of the reduce operation, and writes the result of the reduce operation into the first address in the main memory in the first processor.**

Step 706 is similar to step 505. Details are not described again.

FIG. 8 and FIG. 9 are still used as examples to describe step 706. As shown in FIG. 9, in response to the level-2 write-back requests (ReduceWb) for Z1 and Z2, an HA 1 separately performs a reduce operation on Z1 and Z2. As shown in step 3(3) in FIG. 8, in response to the level-2 write-back request for Z1, the HA 1 first writes Z1 into the main memory address 0x0. The HA 1 obtains a data block corresponding to 0x0 from the cache in the second processor. The HA 1 reads Z1 from the main memory address 0x0 (corresponding to sub-step i in step 3(3) in FIG. 8), performs a reduce operation on Z1 and the data block obtained from the cache in the second processor (corresponding to sub-step ii in step 3(3) in FIG. 8), and writes a result of the reduce operation into the main memory address 0x0 (corresponding to sub-step iii in step 3(3) in FIG. 8). A process in which the HA 1 performs a reduce operation on Z2 is similar to a process in which the HA 1 performs a reduce operation on Z1. Details are not described again. As shown in FIG. 9, when the HA 1 performs the reduce operations on Z1 and Z2, the CA 1 writes Z3 and Z4 that are obtained by the processor core through computing. Subsequent processes are similar to processes of processing Z1 and Z2. Details are not described again.

**707: The second agent sets the status of the first cache line to an invalid state, where the invalid state indicates that data in the first cache line is invalid.**

FIG. 8 and FIG. 9 are still used as examples to describe step 707. As shown in step 4 in FIG. 8, after results of the reduce operations corresponding to Z1 and Z2 are written, the CA 1 sets statuses of the cache lines, corresponding to Z1 and Z2, in the cache to I.

In the foregoing method, in a model training process, a computational process and a reduce process on an intermediate compute result of a target layer in a model are respectively performed by the processor core and the first agent in the processor, and the processor core and the first agent may perform the two processes in parallel. Therefore, the reduce process does not need to start to be performed only after the computational process is completed, that is, the computational process and the reduce process overlap in time, so that overall duration of model training can be shortened. In addition, when the first agent performs a reduce process on a former data block, the processor core can perform a computational process on a latter data block in parallel, thereby avoiding idleness of a computing capability of the processor core, and therefore improving utilization of computational power of the processor. In addition, a data amount of a data block in the first intermediate result is equal to an integer multiple of a capacity of a cache line in the cache, so that when the data block is written into the cache, each data block can exactly fill an integer quantity of cache lines, thereby avoiding a cache space waste problem caused by misalignment between the data amount of the data block and the capacity of the cache line. In addition, hardware (the first agent and the second agent) in the processor completes cross-device data reducing, and a reduce process does not need to be configured or initiated by software, thereby reducing software stack overheads, and shortening data synchronization duration. Further, the processor core sends a write-back request for a plurality of data blocks to the second agent only after obtaining the plurality of data blocks through computing, to indicate to perform a reduce operation on the plurality of data blocks and write a result of the reduce operation into the main memory. In this way, a quantity of times that the processor core sends a request can be reduced, so that computational power of the processor core can be more used for computing, thereby improving the utilization of the computational power of the processor, and further shortening the overall duration of the model training.

It should be noted that the foregoing embodiments shown in FIG. 5 and FIG. 7 are both described by using an example in which the first processor obtains the compute result of the target layer and stores each data block in the compute result in the main memory in the first processor. In some embodiments, the first processor obtains a part of data blocks in the compute result of the target layer, the second processor obtains another part of data blocks in the compute result of the target layer, and each processor stores, in a main memory in the processor, a data block obtained by the processor. For example, the first processor obtains 1^{st} to (N-1)^{th} data blocks (that is, in the foregoing embodiments corresponding to FIG. 5 and FIG. 7, a value of i is less than N) in the compute result of the target layer, and the second processor obtains an N^{th} data block and a data block following the N^{th} data block in the compute result of the target layer. When the first processor obtains an m^{th} (m is an integer greater than or equal to N) data block in the first intermediate result through computing, the first processor first writes the data block into the cache in the first processor, and when the second processor sends a data obtaining request to the first processor, the first processor sends the data block to the second processor, so that the second processor reduces the data block, to obtain an m^{th} data block in the compute result of the target layer. The following describes the process.

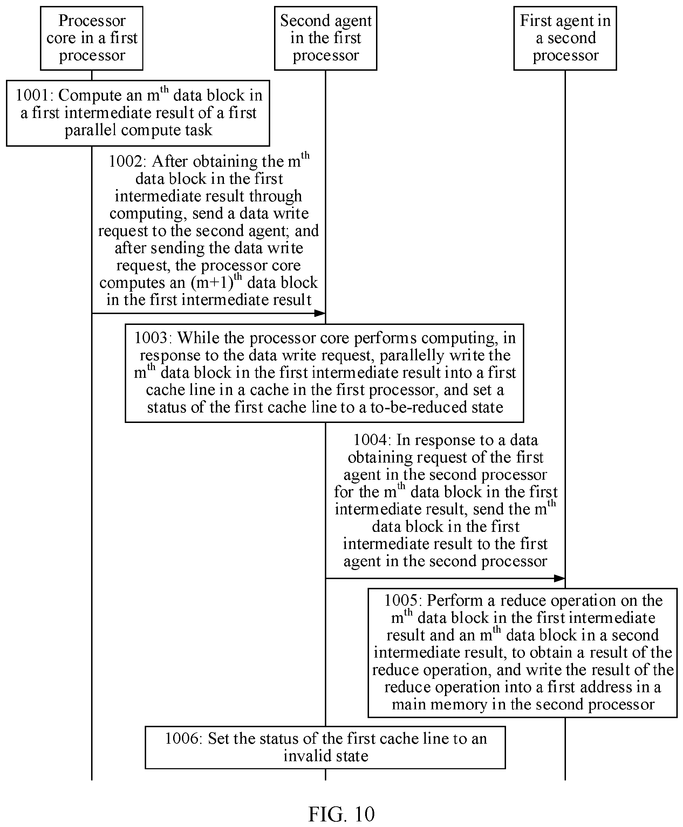

FIG. 10 is a flowchart of data write and reduce processes in a multilevel storage-based data read/write method according to an embodiment of this application. As shown in FIG. 10, the method is applied to a distributed cluster. The distributed cluster includes a plurality of processors, and the plurality of processors can perform mutual memory access. A first processor includes a processor core, a first agent, a second agent, a main memory, and a cache. The first agent in the first processor is configured to: receive a request for the main memory and perform a read/write operation on the main memory in the first processor. The second agent in the first processor is configured to: receive a request for the cache and perform a read/write operation on the cache in the first processor. The second agent and the cache in the first processor form a storage unit in a level-1 storage in a multilevel storage, and the first agent and the main memory in the first processor form a storage unit in a level-2 storage in the multilevel storage. The method includes the following step 1001 to step 1006.

**1001: The processor core computes an m^{th} data block in a first intermediate result of a first parallel compute task, where m is an integer greater than or equal to N.**

In some embodiments, a first address range in the main memory in the first processor is used as storage space of a part of data blocks in a compute result of a target layer, and a second address range in a main memory in a second processor is used as storage space of another part of data blocks in the compute result of the target layer. For any data block in the first intermediate result obtained by the processor core through computing, if a main memory address corresponding to the data block corresponds to the first address range, the first processor performs a reduce operation on the data block and stores a result of the reduce operation; and if a main memory address corresponding to the data block corresponds to the second address range, the second processor performs a reduce operation on the data block and stores a result of the reduce operation. The foregoing example in step 502 is still used as an example. Main memory capacities of the first processor and the second processor are both 4 gigabytes (GB), a main memory address range of the first processor is 0x0 to 0xFFFFFFFF, a main memory address range of the second processor is 0x100000000 to 0x1FFFFFFFF, and main memory addresses of the two processors are consecutive. A scale of the compute result of the target layer is 1024×1024, and each piece of data is a 2-byte half-precision floating-point number. Therefore, a data amount corresponding to the compute result of the target layer is 2 megabytes (MB), and the first processor and the second processor separately store 1 MB data in the compute result of the target layer. The first address range (0x0 to 0xFFFFF, whose capacity is 1 MB) in the first processor is used as the storage space of the part of data blocks in the compute result of the target layer, and the second address range (0x100000000 to 0x1000FFFFF, whose capacity is 1 MB) in the second processor is used as the storage space of the another part of data blocks in the compute result of the target layer.

An i^{th} (i is an integer greater than 0 and less than N) data block in the first intermediate result corresponds to the first address range in the first processor, and the m^{th} (m is greater than N) data block in the first intermediate compute result corresponds to the second address range in the second processor.

A process in which the processor core computes the m^{th} data block in the first intermediate compute result is similar to the process in which the processor core computes the i^{th} data block in the first intermediate result in step 501. Details are not described again.

**1002: After obtaining the m^{th} data block in the first intermediate result through computing, the processor core sends a data write request to the second agent; and after sending the data write request, the processor core computes an (m+1)^{th} data block in the first intermediate result, where the data write request indicates to write the m^{th} data block in the first intermediate result into the cache in the first processor.**

**1003: While the processor core performs computing, in response to the data write request, the second agent parallelly writes the m^{th} data block in the first intermediate result into a first cache line in the cache in the first processor, and sets a status of the first cache line to a pending-reduce state.**

Step 1002 and step 1003 are similar to step 702 and step 703. Details are not described again.

**1004: In response to a data obtaining request of a first agent in the second processor for the m^{th} data block in the first intermediate result, the second agent sends the m^{th} data block in the first intermediate result to the first agent in the second processor.**

In response to the data obtaining request, the second agent obtains, based on a first address carried in the data obtaining request, data from a cache line, corresponding to the first address, in the cache in the first processor, where the data is the m^{th} data block in the first intermediate result. The second agent sends the obtained data to the first agent in the second processor. The second agent determines, from the cache in the first processor based on the first address, the cache line corresponding to the first address. If a status of the cache line is a pending-reduce state, the second agent obtains the data from the cache line, to obtain the m^{th} data block in the first intermediate result.

**1005: The first agent in the second processor performs a reduce operation on the m^{th} data block in the first intermediate result and an m^{th} data block in a second intermediate result, to obtain a result of the reduce operation, and writes the result of the reduce operation into the first address in the main memory in the second processor.**

**1006: The second agent sets the status of the first cache line to an invalid state.**

Step 1005 and step 1006 are similar to step 505 and step 506. Details are not described again.

The foregoing describes, by using the embodiments shown in FIG. 5, FIG. 7, and FIG. 10, the data write and reduce processes in the multilevel storage-based data read/write method provided in embodiments of this application. The following describes a data read process in the multilevel storage-based data read/write method provided in embodiments of this application.

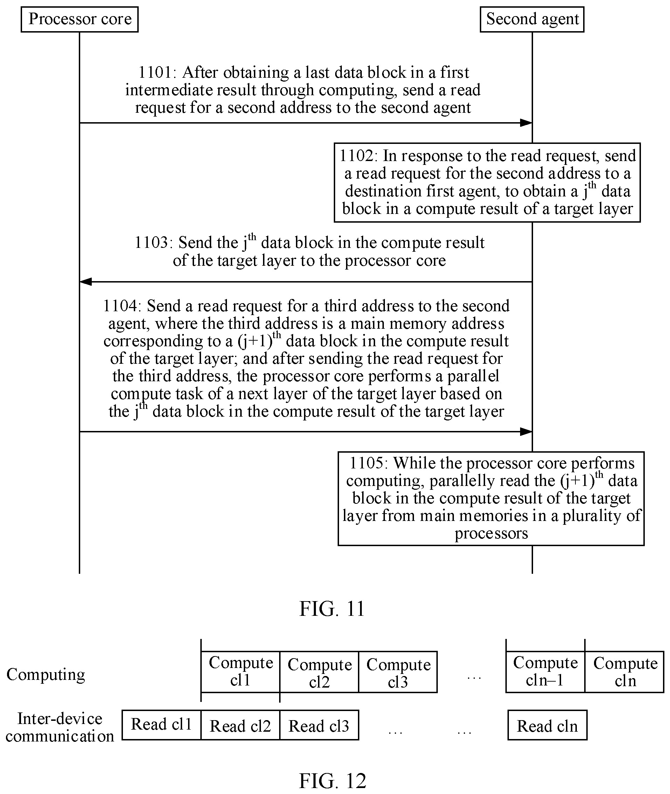

FIG. 11 is a flowchart of a data read process in a multilevel storage-based data read/write method according to an embodiment of this application. As shown in FIG. 11, the method is applied to a first processor in a distributed cluster. The distributed cluster includes a plurality of processors, and the plurality of processors can perform mutual memory access. The first processor includes a processor core, a first agent, a second agent, a main memory, and a cache. The first agent in the first processor is configured to: receive a request for the main memory and perform a read/write operation on the main memory in the first processor. The second agent in the first processor is configured to: receive a request for the cache and perform a read/write operation on the cache in the first processor. The second agent and the cache in the first processor form a storage unit in a level-1 storage in a multilevel storage, and the first agent and the main memory in the first processor form a storage unit in a level-2 storage in the multilevel storage. The method includes the following step 1101 to step 1105.

**1101: After the processor core obtains a last data block in a first intermediate result through computing, the processor core sends a read request for a second address to the second agent, where the second address is a main memory address corresponding to a j^{th} data block in a compute result of a target layer, and j is an integer greater than 0.**

**1102: In response to the read request, the second agent sends a read request for the second address to a destination first agent, to obtain the j^{th} data block in the compute result of the target layer, where the destination first agent is a first agent in a processor, corresponding to the second address, in the plurality of processors.**

When the second address corresponds to the main memory in the first processor, in response to the read request, the second agent sends a read request for the second address to the first agent in the first processor, to obtain the j^{th} data block in the compute result of the target layer. When the second address corresponds to a main memory in a second processor, in response to the read request, the second agent sends a read request for the second address to a first agent in the second processor, to obtain the j^{th} data block in the compute result of the target layer.

In some embodiments, when the second address corresponds to the main memory in the first processor, and a cache line corresponding to the second address does not exist in the cache in the first processor, the second agent sends the read request for the second address to the first agent in the first processor, and receives a data block, returned by the first agent in the first processor, in the second address. In response to the read request, the first agent in the first processor reads the data block from the second address in the main memory in the first processor, and returns the data block to the second agent.

In some other embodiments, when the second address corresponds to the main memory in the first processor, a cache line corresponding to the second address exists in the cache in the first processor, and a status of the cache line is a pending-reduce state, when the status of the cache line is an invalid state, the second agent sends the read request for the second address to the first agent in the first processor, and receives a data block, returned by the first agent in the first processor, in the second address. That the status of the cache line is the pending-reduce state indicates that data in the cache line has not been reduced, and cannot be read by using a data read request (PrRd). That the status of the cache line is the invalid state indicates that data in the cache line has been reduced and written into the main memory in the first processor.

In some embodiments, after the second agent sends the read request for the second address to the destination first agent, to obtain the j^{th} data block in the compute result of the target layer, the second agent writes the j^{th} data block in the compute result of the target layer into a second cache line in the cache in the first processor, and sets a status of the second cache line to a shared state, where the shared state indicates that data in the second cache line is valid and can be read by using a data read request. In the foregoing embodiment, after reading the data block from the second address, the second agent writes the data block into the cache line in the cache, and sets the status of the cache line to the shared state, so that the data block can be directly obtained from the cache during next-time reading without main memory read performed by the first agent, thereby improving read efficiency of the data block.

It should be noted that step 1102 is described by using an example in which the j^{th} data block in the compute result of the target layer does not exist in the cache in the first processor. In some embodiments, the second address corresponds to the main memory in the first processor, the main memory in the first processor exists in a cache line corresponding to the second address, and a status of the cache line is a shared state (it indicates that the j^{th} data block in the compute result of the target layer exists in the cache in the first processor). In this case, the second agent directly reads the j^{th} data block in the compute result of the target layer from the cache line, and does not need to send the read request for the second address to the destination first agent.

1103: The second agent sends the jth data block in the compute result of the target layer to the processor core.

1104: The processor core sends a read request for a third address to the second agent, where the third address is a main memory address corresponding to a (j+1)th data block in the compute result of the target layer; and after sending the read request for the third address, the processor core performs a parallel compute task of a next layer of the target layer based on the jth data block in the compute result of the target layer.

1105: While the processor core performs computing, the second agent parallelly reads the (j+1)th data block in the compute result of the target layer from main memories in the plurality of processors.

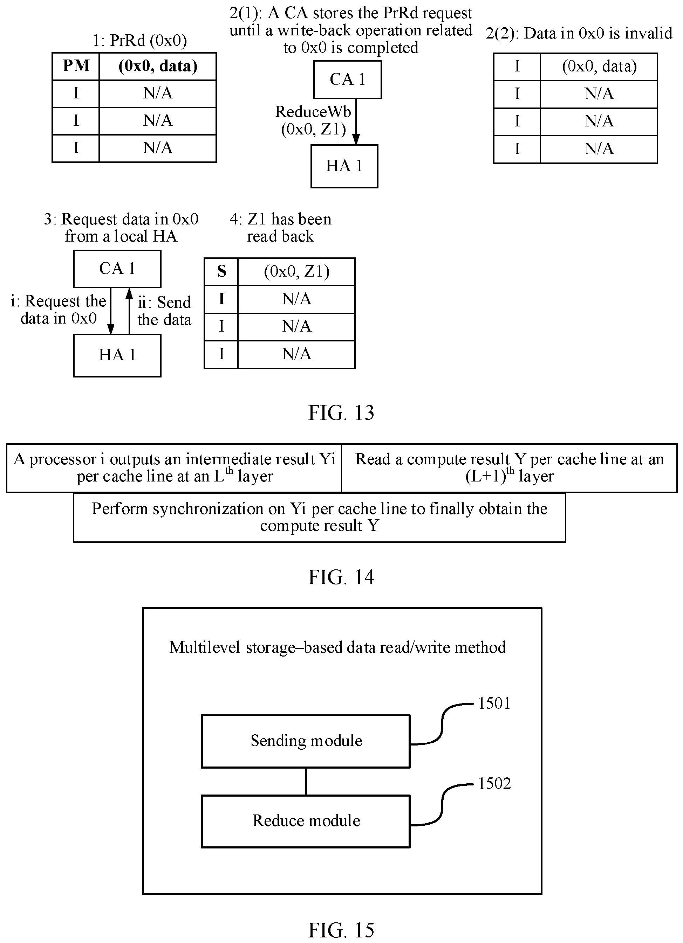

The following still uses the example corresponding to FIG. 8 as an example to describe the procedure shown in step 1101 to step 1105 with reference to FIG. 12 and FIG. 13. FIG. 12 is a schematic flowchart of a data read process in a multilevel storage-based data read/write method according to an embodiment of this application. As shown in FIG. 12, a second agent reads cl1, and a processor core performs computing based on cl1. When the processor core performs computing based on cl1, the second agent reads cl2. Processes of reading cl2 to cln are similar to a process of reading cl1. Details are not described again. FIG. 13 is a schematic flowchart of a data read process in a multilevel storage-based data read/write method according to an embodiment of this application. As shown in step 1 in FIG. 13, a processor core sends a data read request (PrRd) to a CA 1, where the data read request carries a second address 0x0. In response to the read request, the CA 1 determines that the second address 0x0 carried in the read request corresponds to a main memory in a first processor, where a cache line corresponding to the second address 0x0 exists in a cache in the processor, and a status of the cache line is PM. As shown in step 2(1) in FIG. 13, the CA 1 stores the data read request until a reduce operation on data in the cache line corresponding to the second address 0x0 is completed. As shown in step 2(2) in FIG. 13, after the reduce operation on the data in the cache line corresponding to the second address 0x0 is completed, the CA 1 modifies the status of the cache line corresponding to the second address 0x0 to I. As shown in step 3 in FIG. 13, the CA 1 sends a data read request to an HA 1 in the first processor, to obtain data in the second address 0x0, and the CA 1 receives the data returned by the HA 1. As shown in step 4 in FIG. 13, after reading back the data in 0x0, the CA 1 writes the data into the cache line, corresponding to 0x0, in the cache, and modifies the status of the cache line to S.

In the foregoing method, in a model training process, a computational process and a reduce process on an intermediate compute result of a target layer in a model are respectively performed by the processor core and the first agent in the processor, and the processor core and the first agent may perform the two processes in parallel. Therefore, the reduce process does not need to start to be performed only after the computational process is completed, that is, the computational process and the reduce process overlap in time, so that overall duration of model training can be shortened. In addition, when the first agent performs a reduce process on a former data block, the processor core can perform a computational process on a latter data block in parallel, thereby avoiding idleness of a computing capability of the processor core, and therefore improving utilization of computational power of the processor. Further, after the processor core in the first processor completes computing on the last data block in the first intermediate compute result, the processor core can perform a read operation on a compute result of the target layer, to start to perform a parallel compute task at a next layer of the target layer without waiting for completion of computing of the entire compute result of the target layer. This can further shorten the overall duration of the model training, and improve the utilization of the computational power of the processor. FIG. 14 is a schematic flowchart of a multilevel storage-based data read/write method according to an embodiment of this application. In FIG. 14, for a parallel compute task of an L^{th} layer in a model, a processor i outputs an intermediate compute result Yi per cache line, and when outputting the intermediate compute result Yi, the processor i performs synchronization on Yi per cache line to finally obtain a compute result Y of the L^{th} layer. After computing of the intermediate compute result Yi is completed, a determined data block in the compute result Y may be read per cache line when the compute result Y is determined, to perform a parallel compute task of an (L+1)^{th} layer.

FIG. 15 is a diagram of a structure of a multilevel storage-based data read/write apparatus according to an embodiment of this application. The apparatus is used in a multilevel storage. Each level of storage includes at least one independent storage unit. The apparatus includes a sending module 1501 and a reduce module 1502.

The sending module 1501 is configured to send a level-(k+1) write-back request to a level-(k+1) storage in the multilevel storage by using a level-k storage in the multilevel storage, where the level-(k+1) write-back request carries a first address, and k is an integer greater than or equal to 1.

The reduce module 1502 is configured to: by using the level-(k+1) storage in response to the level-(k+1) write-back request, perform a reduce operation on data in a plurality of cache lines, corresponding to the first address, in the level-k storage, and write a result of the reduce operation into the level-(k+1) storage, where different cache lines in the plurality of cache lines correspond to different storage units in the level-k storage.

Optionally, the sending module 1501 is configured to:
when k is equal to 1, in response to a level-1 write-back request sent by a processor core, send a level-2 write-back request to a storage unit in a level-2 storage by using a storage unit in a level-1 storage, where the level-1 write-back request carries the first address; and
when k is greater than or equal to 2, after the storage unit in the level-k storage completes a reduce operation indicated by a level-k write-back request, send the level-(k+1) write-back request to a storage unit in the level-(k+1) storage by using the storage unit in the level-k storage.

Optionally, the apparatus further includes:
a determining module, configured to: in response to a write request for the level-k storage, determine a cache line corresponding to the first address from the storage unit in the level-k storage by using the storage unit in the level-k storage, where the write request carries the first address; and
a writing module, configured to:
   if a status of the cache line corresponding to the first address is an invalid state or a shared state, by using the storage unit in the level-k storage, write to-be-written data corresponding to the write request into the cache line corresponding to the first address, and set the status of the cache line corresponding to the first address to a pending-reduce state, where the invalid state indicates that data in the cache line is invalid, the shared state indicates that data in the cache line is valid and readable, and the pending-reduce state indicates that data in the cache line is valid and has not been reduced; and
   if a status of the cache line corresponding to the first address is the pending-reduce state, write, by using the storage unit in the level-k storage, the to-be-written data corresponding to the write request into the cache line corresponding to the first address.

Optionally, the determining module is configured to:
when k is equal to 1, in response to a data write request sent by the processor core, determine the cache line corresponding to the first address from the storage unit in the level-1 storage by using the storage unit in the level-1 storage, where to-be-written data corresponding to the data write request is data carried in the data write request; and
when k is greater than or equal to 2, in response to the level-k write-back request sent by a storage unit in a level-(k-1) storage, determine the cache line corresponding to the first address from the storage unit in the level-k storage by using the storage unit in the level-k storage, where to-be-written data corresponding to the level-k write-back request is a result of the reduce operation indicated by the level-k write-back request.

Optionally, when k is greater than or equal to 2, the apparatus further includes:
a setting module, configured to set a status of a cache line, corresponding to the first address, in the level-(k-1) storage to an invalid state by using the level-(k-1) storage.

Optionally, the apparatus further includes:
a reading module, configured to:
receive a read request for the storage unit in the level-k storage by using the storage unit in the level-k storage, where the read request carries a second address;
if a cache line corresponding to the second address exists in the storage unit in the level-k storage, and a status of the cache line corresponding to the second address is a shared state, by using the storage unit in the level-k storage, read data from the cache line corresponding to the second address, and return the read data to the processor core;
if a cache line corresponding to the second address exists in the storage unit in the level-k storage, and a status of the cache line corresponding to the second address is a pending-reduce state, when the status of the cache line corresponding to the second address becomes an invalid state, by using the storage unit in the level-k storage, send a read request to the storage unit in the level-(k+1) storage based on the second address, to read data corresponding to the second address, and return the read data to the processor core; and
if a cache line corresponding to the second address does not exist in the storage unit in the level-k storage, by using the storage unit in the level-k storage, send a read request to the storage unit in the level-(k+1) storage based on the second address, to read data corresponding to the second address, and return the read data to the processor core.

Optionally, the setting module is further configured to:
If the storage unit in the level-k storage reads the data corresponding to the second address from the storage unit in the level-(k+1) storage, the storage unit in the level-k storage determines a target cache line from the storage unit in the level-k storage, writes the read data into the target cache line, and sets a status of the target cache line to a shared state.

It should be noted that, in another embodiment, steps that the foregoing modules are responsible for implementing may be specified as required, and all functions of the foregoing apparatus are implemented by separately implementing different steps in the foregoing multilevel storage-based data read/write method by using the foregoing modules. In other words, when the multilevel storage-based data read/write apparatus provided in the foregoing embodiment implements the multilevel storage-based data read/write method, the foregoing functional module division is merely used as an example for description. In actual application, the foregoing functions may be allocated to different functional modules for implementation as required, that is, an internal structure of the apparatus is divided into different functional modules, to implement all or some of the functions described above. In addition, the apparatus provided in the foregoing embodiment and the corresponding method embodiment belong to a same concept. For a specific implementation process thereof, refer to the method embodiment. Details are not described herein again.

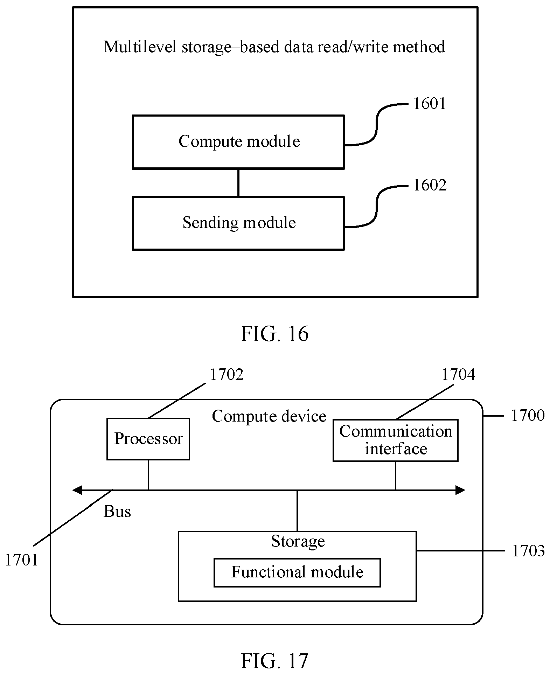

FIG. 16 is a diagram of a structure of a multilevel storage-based data read/write apparatus according to an embodiment of this application. The apparatus is used in a processor core. The apparatus includes a compute module 1601 and a sending module 1602.

The compute module 1601 is configured to compute an i^{th} data block in a first intermediate result of a first parallel compute task, where i is an integer greater than or equal to 1, the i^{th} data block in the first intermediate result corresponds to a first address, and the first parallel compute task is used to compute a part of compute results in a target compute task.

The sending module 1602 is configured to send a write-back request to a multilevel storage after the i^{th} data block in the first intermediate result is obtained through computing, where the write-back request indicates the multilevel storage to perform, level by level, a reduce operation on data in a plurality of cache lines, corresponding to the first address, in the multilevel storage, and write a final result of the reduce operation into the first address.

The compute module 1601 is further configured to compute an (i+1)^{th} data block in the first intermediate result after the write-back request is sent.

Optionally, the sending module 1602 is configured to:
each time n data blocks in the first intermediate result are obtained through computing, send a write-back request for the n data blocks to the multilevel storage, where n is an integer greater than or equal to 1.

Optionally, each level of storage in the multilevel storage includes at least one independent storage unit, and the sending module 1602 is further configured to:
send a data write request to a storage unit in a level-1 storage in the multilevel storage, where the data write request carries the first address and to-be-written data; the to-be-written data is the i^{th} data block in the first intermediate result; the data write request indicates the storage unit in the level-1 storage to write the to-be-written data into a cache line corresponding to the first address; after the to-be-written data is written into the cache line corresponding to the first address, a status of the cache line is a pending-reduce state; and the pending-reduce state indicates that data in the cache line is valid and has not been reduced.

Optionally, the sending module 1602 is further configured to:
send a read request for a second address to the storage unit in the level-1 storage in the multilevel storage, to read data corresponding to the second address from the multilevel storage, where the data corresponding to the second address is a j^{th} data block in the compute result of the target compute task, and j is an integer greater than or equal to 1; and
receive data, corresponding to the second address, returned by the multilevel storage, and send a read request for a third address to the multilevel storage, to read data corresponding to the third address from the multilevel storage, where the data corresponding to the third address is a (j+1)^{th} data block in the compute result.

The compute module 1601 is further configured to: after the read request for the third address is sent to the multilevel storage, perform a next compute task of the target compute task based on the j^{th} data block in the compute result.

It should be noted that, in another embodiment, steps that the foregoing modules are responsible for implementing may be specified as required, and all functions of the foregoing apparatus are implemented by separately implementing different steps in the foregoing multilevel storage-based data read/write method by using the foregoing modules. In other words, when the multilevel storage-based data read/write apparatus provided in the foregoing embodiment implements the multilevel storage-based data read/write method, the foregoing functional module division is merely used as an example for description. In actual application, the foregoing functions may be allocated to different functional modules for implementation as required, that is, an internal structure of the apparatus is divided into different functional modules, to implement all or some of the functions described above. In addition, the apparatus provided in the foregoing embodiment and the corresponding method embodiment belong to a same concept. For a specific implementation process thereof, refer to the method embodiment. Details are not described herein again.

The sending module 1501, the reduce module 1502, the compute module 1601, and the sending module 1602 may all be implemented by using software, or may be implemented by using hardware. For example, the following uses the compute module 1601 as an example to describe an implementation of the compute module 1601. Similarly, for implementations of the sending module 1501, the reduce module 1502, and the sending module 1602, refer to the implementation of the compute module 1601.

The module is used as an example of a software functional unit, and the compute module 1601 may include code running on a compute instance. The compute instance may include at least one of a physical host (compute device), a virtual machine, or a container. Further, there may be one or more compute instances. For example, the compute module 1601 may include code running on a plurality of hosts/virtual machines/containers. It should be noted that the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed in a same virtual private cloud (virtual private cloud, VPC), or may be distributed in a plurality of VPCs. Usually, one VPC is set in one region. A communication gateway needs to be set in each VPC for cross-region communication between two VPCs in a same region or between VPCs in different regions. Interconnection between the VPCs is implemented through the communication gateway.

A module is used as an example of a hardware functional unit, and the compute module 1601 may include at least one compute device, for example, a server. Alternatively, the compute module 1601 may be a device implemented by using an application-specific integrated circuit (application-specific integrated circuit, ASIC) or a programmable logic device (programmable logic device, PLD), or the like. The PLD may be implemented by using a complex programmable logic device (complex programmable logic device, CPLD), a field-programmable gate array (field-programmable gate array, FPGA), a generic array logic (generic array logic, GAL), or any combination thereof.

A plurality of compute devices included in the compute module 1601 may be distributed in a same region, or may be distributed in different regions. The plurality of compute devices included in the compute module 1601 may be distributed in a same AZ, or may be distributed in different AZs. Similarly, the plurality of compute devices included in the compute module 1601 may be distributed in a same VPC, or may be distributed in a plurality of VPCs. The plurality of compute devices may be any combination of compute devices such as a server, an ASIC, a PLD, a CPLD, an FPGA, and a GAL.

This application further provides a compute device 1700. FIG. 17 is a diagram of a structure of a compute device according to an embodiment of this application. As shown in FIG. 17, the compute device 1700 includes a bus 1701, a processor 1702, a storage 1703, and a communication interface 1704. The processor 1702, the storage 1703, and the communication interface 1704 communicate with each other through the bus 1701. The compute device 1700 may be a compute device or a terminal device. It should be understood that quantities of processors and storages in the compute device 1700 are not limited in this application.

The bus 1701 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, the bus is represented by using only one line in FIG. 17, but it does not indicate that there is only one bus or one type of bus. The bus 1701 may include a path for transferring information between components (for example, the storage 1703, the processor 1702, and the communication interface 1704) of the compute device 1700.

The processor 1702 may include any one or more of processors such as a central processing unit (central processing unit, CPU), a graphics processing unit (graphics processing unit, GPU), a microprocessor (microprocessor, MP), or a digital signal processor (digital signal processor, DSP).

The storage 1703 may include a volatile memory (volatile memory), for example, a random access memory (random access memory, RAM). The storage 1703 may further include a non-volatile memory (non-volatile memory), for example, a read-only memory (read-only memory, ROM), a flash memory, a hard disk drive (hard disk drive, HDD), or a solid-state drive (solid-state drive, SSD).

The storage 1703 stores executable program code, and the processor 1702 executes the executable program code to separately implement functions of the sending module 1501 and the reduce module 1502, so as to implement the multilevel storage-based data read/write method. In other words, the storage 1703 stores instructions for performing the multilevel storage-based data read/write method.

Alternatively, the storage 1703 stores executable program code, and the processor 1702 executes the executable program code to separately implement functions of the compute module 1601 and the sending module 1602, so as to implement the multilevel storage-based data read/write method. In other words, the storage 1703 stores instructions for performing the multilevel storage-based data read/write method.

The communication interface 1704 uses a transceiver module, for example, but not limited to, a network interface card or a transceiver, to implement communication between the compute device 1700 and another device or a communication network.

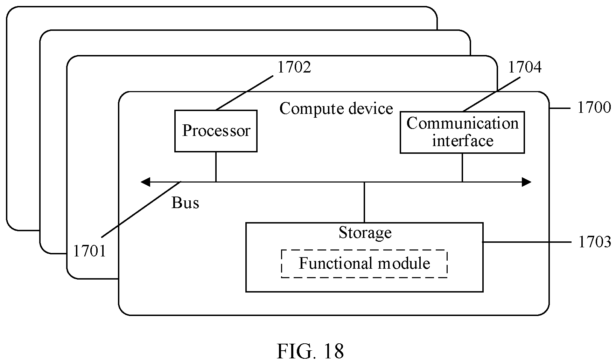

An embodiment of this application further provides a distributed cluster. FIG. 18 is a diagram of a distributed cluster according to an embodiment of this application. As shown in FIG. 18, the distributed cluster includes at least one compute device 1700. Storages 1703 in one or more compute devices 1700 in the distributed cluster may store same instructions for performing the multilevel storage-based data read/write method.

In some possible implementations, alternatively, the storages 1703 in the one or more compute devices 1700 in the distributed cluster may separately store some instructions for performing the multilevel storage-based data read/write method. In other words, a combination of the one or more compute devices 1700 may jointly execute instructions for performing the multilevel storage-based data read/write method.

It should be noted that storages 1703 in different compute devices 1700 in the distributed cluster may store different instructions, which are respectively used to perform some functions of a content generation apparatus. In other words, the instructions stored in the storages 1703 in the different compute devices 1700 may implement functions of one or more of the sending module 1501, the reduce module 1502, the compute module 1601, and the sending module 1602.

It should be understood that functions of the compute device 1700 shown in FIG. 18 may alternatively be completed by a plurality of compute devices 1700.

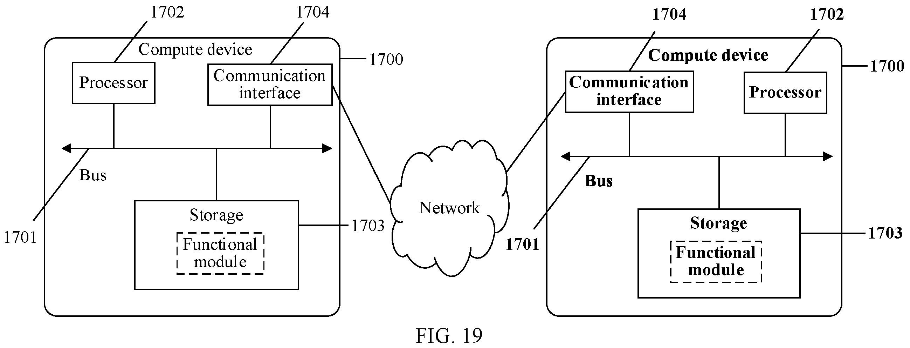

In some possible implementations, one or more compute devices in the distributed cluster may be connected through a network. The network may be a wide area network, a local area network, or the like. FIG. 19 shows a possible implementation. FIG. 19 is a diagram of a possible implementation of a distributed cluster according to an embodiment of this application. As shown in FIG. 19, two compute devices 1700 are connected through a network. Specifically, each compute device is connected to the network through a communication interface in the compute device.

An embodiment of this application further provides another distributed cluster. For a connection relationship between compute devices in the distributed cluster, refer to a connection manner in FIG. 18 or FIG. 19. A difference lies in that storages 1703 in one or more compute devices 1700 in the distributed cluster may store same instructions for performing the multilevel storage-based data read/write method.

In some possible implementations, alternatively, the storages 1703 in the one or more compute devices 1700 in the distributed cluster may separately store some instructions for performing the multilevel storage-based data read/write method. In other words, a combination of the one or more compute devices 1700 may jointly execute instructions for performing the multilevel storage-based data read/write method.

It should be noted that storages 1703 in different compute devices 1700 in the distributed cluster may store different instructions, which are respectively used to perform some functions of a content generation apparatus. In other words, the instructions stored in the storages 1703 in the different compute devices 1700 may implement functions of one or more of the sending module 1501, the reduce module 1502, the compute module 1601, and the sending module 1602.

An embodiment of this application provides a computer-readable storage medium. The computer-readable storage medium may be any usable medium that can be stored by a compute device, or a data storage device, for example, a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes program code. When the program code is executed by a processor core, the processor core performs the steps performed by the processor core in the multilevel storage-based data read/write method provided in the foregoing method embodiments, or when the program code is executed by a multilevel storage, the multilevel storage performs the steps performed by the multilevel storage in the multilevel storage-based data read/write method provided in the foregoing method embodiments.

It should be noted that information (including but not limited to user equipment information, user personal information, and the like), data (including but not limited to data for analysis, data for storage, data for display, and the like), and signals in this application are all authorized by users or fully authorized by all parties, and collection, use, and processing of related data need to comply with related laws, regulations, and standards of related countries and regions. For example, data in this application is obtained under full authorization.

Persons of ordinary skill in the art may be aware that, method steps and units described in combination with embodiments disclosed in this specification may be implemented by electronic hardware, computer software, or a combination thereof. To clearly describe interchangeability between the hardware and the software, the foregoing has generally described steps and compositions of each embodiment according to functions. Whether the functions are performed by hardware or software depends on particular applications and design constraint conditions of the technical solutions. Persons of ordinary skill in the art may use different methods to implement the described functions for each particular application, but it should not be considered that the implementation goes beyond the scope of this application.

It may be clearly understood by persons skilled in the art that, for the purpose of convenient and brief description, for a detailed working process of the foregoing described system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, in other words, may be located in one place, or may be distributed on a plurality of network units. Some or all of the units may be selected according to actual needs to achieve the objectives of the solutions of embodiments of this application.

In addition, units in embodiments of this application may be integrated into one processing unit, each of the units may exist alone physically, or two or more units may be integrated into one unit. The integrated unit may be implemented in a form of hardware, or may be implemented in a form of a software unit.

When the integrated unit is implemented in a form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a compute device (which may be a personal computer, a server, a compute device, or the like) to perform all or some of steps of the methods in embodiments of this application. The foregoing storage medium includes any medium that can store program code, such as a USB flash drive, a removable hard disk, a read-only memory (read-only memory, ROM), a RAM, a magnetic disk, or an optical disc.

In this application, terms such as "first" and "second" are used to distinguish between same items or similar items that have basically same roles and functions. It should be understood that there is no logical or time sequence dependency between "first", "second", and "n^{th}", and a quantity and an execution sequence are not limited. It should be further understood that although the following descriptions use terms such as first and second to describe various elements, these elements should not be limited by the terms. These terms are merely used to distinguish one element from another.

In this application, the term "at least one" means one or more, and the term "a plurality of" in this application means two or more. The terms "system" and "network" may be often used interchangeably in this specification.

It should be further understood that the term "if" may be interpreted as "when" ("when" or "upon"), "in response to determining", or "in response to detecting". Similarly, depending on the context, the expression "if determining..." or "if [the stated condition or event] is detected" may be interpreted as "when it is determined that...", "in response to determining...", "when [the stated condition or event] is detected", or "in response to detecting [the stated condition or event]".

The foregoing descriptions are merely specific implementations of this application, but are not intended to limit the protection scope of this application. Various equivalent modifications or replacements readily figured out by persons skilled in the art within the technical scope disclosed in this application shall fall within the protection scope of this application. Therefore, the protection scope of this application shall be subject to the protection scope of the claims.

All or some of the foregoing embodiments may be implemented by software, hardware, firmware, or any combination thereof. When the software is used for implementation, all or some of embodiments may be implemented in a form of a computer program product. The computer program product includes one or more computer program instructions. When the computer program instructions are loaded and executed on a computer, the procedures or functions according to embodiments of this application are all or partially generated. The computer may be a general-purpose computer, a dedicated computer, a computer network, or another programmable apparatus.

The computer instructions may be stored in a computer-readable storage medium or may be transmitted from a computer-readable storage medium to another computer-readable storage medium. For example, the computer program instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive), or the like.

Persons of ordinary skill in the art may understand that all or some of the steps of embodiments may be implemented by hardware or a program instructing related hardware. The program may be stored in a computer-readable storage medium. The mentioned storage medium may be a read-only memory, a magnetic disk, an optical disc, or the like.

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions recorded in the foregoing embodiments or make equivalent replacements to some technical features thereof. Such modifications or replacements do not make the essence of the corresponding technical solutions depart from the scope of the technical solutions of embodiments of this application.

## Claims

1. A multilevel storage-based data read/write method, applied to a multilevel storage, wherein each level of storage comprises at least one independent storage unit, and the method comprises:
sending, by a level-k storage in the multilevel storage, a level-(k+1) write-back request to a level-(k+1) storage in the multilevel storage, wherein the level-(k+1) write-back request carries a first address, and k is an integer greater than or equal to 1; and
in response to the level-(k+1) write-back request, performing, by the level-(k+1) storage, a reduce operation on data in a plurality of cache lines, corresponding to the first address, in the level-k storage, and writing a result of the reduce operation into the level-(k+1) storage, wherein different cache lines in the plurality of cache lines correspond to different storage units in the level-k storage.

2. The method according to claim 1, wherein sending, by the level-k storage, the level-(k+1) write-back request to the level-(k+1) storage comprises:
when k is equal to 1, in response to a level-1 write-back request sent by a processor core, sending, by a storage unit in a level-1 storage, a level-2 write-back request to a storage unit in a level-2 storage, wherein the level-1 write-back request carries the first address; and
when k is greater than or equal to 2, after the storage unit in the level-k storage completes a reduce operation indicated by a level-k write-back request, sending, by the storage unit in the level-k storage, the level-(k+1) write-back request to a storage unit in the level-(k+1) storage.

3. The method according to claim 1 or 2, wherein the method further comprises:
in response to a write request for the level-k storage, determining, by the storage unit in the level-k storage, a cache line corresponding to the first address from the storage unit in the level-k storage, wherein the write request carries the first address;
if a status of the cache line corresponding to the first address is an invalid state or a shared state, writing, by the storage unit in the level-k storage, to-be-written data corresponding to the write request into the cache line corresponding to the first address, and setting the status of the cache line corresponding to the first address to a pending-reduce state, wherein the invalid state indicates that data in the cache line is invalid, the shared state indicates that data in the cache line is valid and readable, and the pending-reduce state indicates that data in the cache line is valid and has not been reduced; and
if a status of the cache line corresponding to the first address is the pending-reduce state, writing, by the storage unit in the level-k storage, the to-be-written data corresponding to the write request into the cache line corresponding to the first address.

4. The method according to claim 3, wherein in response to the write request for the level-k storage, determining, by the storage unit in the level-k storage, the cache line corresponding to the first address from the storage unit in the level-k storage comprises:
when k is equal to 1, in response to a data write request sent by the processor core, determining, by the storage unit in the level-1 storage, the cache line corresponding to the first address from the storage unit in the level-1 storage, wherein to-be-written data corresponding to the data write request is data carried in the data write request; and
when k is greater than or equal to 2, in response to the level-k write-back request sent by a storage unit in a level-(k-1) storage, determining, by the storage unit in the level-k storage, the cache line corresponding to the first address from the storage unit in the level-k storage, wherein to-be-written data corresponding to the level-k write-back request is a result of the reduce operation indicated by the level-k write-back request.

5. The method according to claim 3 or 4, wherein when k is greater than or equal to 2, after writing, by the storage unit in the level-k storage, the to-be-written data corresponding to the write request into the cache line corresponding to the first address, the method further comprises:
setting, by the level-(k-1) storage, a status of a cache line, corresponding to the first address, in the level-(k-1) storage to an invalid state.

6. The method according to any one of claims 1 to 5, wherein the method further comprises:
receiving, by the storage unit in the level-k storage, a read request for the storage unit in the level-k storage, wherein the read request carries a second address;
if a cache line corresponding to the second address exists in the storage unit in the level-k storage, and a status of the cache line corresponding to the second address is a shared state, reading, by the storage unit in the level-k storage, data from the cache line corresponding to the second address, and returning the read data to the processor core;
if a cache line corresponding to the second address exists in the storage unit in the level-k storage, and a status of the cache line corresponding to the second address is a pending-reduce state, when the status of the cache line corresponding to the second address becomes an invalid state, sending, by the storage unit in the level-k storage, a read request to the storage unit in the level-(k+1) storage based on the second address, to read data corresponding to the second address, and returning the read data to the processor core; and
if a cache line corresponding to the second address does not exist in the storage unit in the level-k storage, sending, by the storage unit in the level-k storage, a read request to the storage unit in the level-(k+1) storage based on the second address, to read data corresponding to the second address, and returning the read data to the processor core.

7. The method according to claim 6, wherein the method further comprises:
if the storage unit in the level-k storage reads the data corresponding to the second address from the storage unit in the level-(k+1) storage, determining, by the storage unit in the level-k storage, a target cache line from the storage unit in the level-k storage, writing the read data into the target cache line, and setting a status of the target cache line to a shared state.

8. A multilevel storage-based data read/write method, applied to a processor core, wherein the method comprises:
computing an i^{th} data block in a first intermediate result of a first parallel compute task, wherein i is an integer greater than or equal to 1, the i^{th} data block in the first intermediate result corresponds to a first address, and the first parallel compute task is used to compute a part of compute results in a target compute task;
sending a write-back request to a multilevel storage after obtaining the i^{th} data block in the first intermediate result through computing, wherein the write-back request indicates the multilevel storage to perform, level by level, a reduce operation on data in a plurality of cache lines, corresponding to the first address, in the multilevel storage, and write a final result of the reduce operation into the first address; and
computing an (i+1)^{th} data block in the first intermediate result after sending the write-back request.

9. The method according to claim 8, wherein sending the write-back request to the multilevel storage after obtaining the i^{th} data block in the first intermediate result through computing comprises:
each time n data blocks in the first intermediate result are obtained through computing, sending a write-back request for the n data blocks to the multilevel storage, wherein n is an integer greater than or equal to 1.

10. The method according to claim 8 or 9, wherein each level of storage in the multilevel storage comprises at least one independent storage unit, and after the i^{th} data block in the first intermediate result is obtained through computing, the method further comprises:
sending a data write request to a storage unit in a level-1 storage in the multilevel storage, wherein the data write request carries the first address and to-be-written data; the to-be-written data is the i^{th} data block in the first intermediate result; the data write request indicates the storage unit in the level-1 storage to write the to-be-written data into a cache line corresponding to the first address; after the to-be-written data is written into the cache line corresponding to the first address, a status of the cache line is a pending-reduce state; and the pending-reduce state indicates that data in the cache line is valid and has not been reduced.

11. The method according to any one of claims 8 to 10, wherein the method further comprises:
sending a read request for a second address to the storage unit in the level-1 storage in the multilevel storage, to read data corresponding to the second address from the multilevel storage, wherein the data corresponding to the second address is a j^{th} data block in the compute result of the target compute task, and j is an integer greater than or equal to 1;
receiving the data, corresponding to the second address, returned by the multilevel storage, and sending a read request for a third address to the multilevel storage, to read data corresponding to the third address from the multilevel storage, wherein the data corresponding to the third address is a (j+1)^{th} data block in the compute result; and
after sending the read request for the third address to the multilevel storage, performing a next compute task of the target compute task based on the j^{th} data block in the compute result.

12. A multilevel storage-based data read/write method, wherein each level of storage in a multilevel storage comprises at least one independent storage unit, and the method comprises:
computing, by a processor core, an i^{th} data block in a first intermediate result of a first parallel compute task, wherein i is an integer greater than or equal to 1, the i^{th} data block in the first intermediate result corresponds to a first address, and the first parallel compute task is used to compute a part of compute results in a target compute task;
sending, by the processor core, a write-back request to the multilevel storage after obtaining the i^{th} data block in the first intermediate result through computing, wherein the write-back request indicates the multilevel storage to perform, level by level, a reduce operation on data in a plurality of cache lines, corresponding to the first address, in the multilevel storage, and write a final result of the reduce operation into the first address;
computing, by the processor core, an (i+1)^{th} data block in the first intermediate result after sending the write-back request;
sending, by a level-k storage in the multilevel storage, a level-(k+1) write-back request to a level-(k+1) storage in the multilevel storage while the processor core performs computing, wherein the level-(k+1) write-back request carries the first address, and k is an integer greater than or equal to 1; and
in response to the level-(k+1) write-back request, performing, by the level-(k+1) storage, a reduce operation on data in a plurality of cache lines, corresponding to the first address, in the level-k storage, and writing a result of the reduce operation into the level-(k+1) storage, wherein different cache lines in the plurality of cache lines correspond to different storage units in the level-k storage, statuses of the plurality of cache lines are pending-reduce states, and the pending-reduce states indicate that the data in the cache lines is valid and has not been reduced.

13. A multilevel storage-based data read/write apparatus, used in a multilevel storage, wherein each level of storage comprises at least one independent storage unit, and the apparatus comprises:
a sending module, configured to send a level-(k+1) write-back request to a level-(k+1) storage in the multilevel storage by using a level-k storage in the multilevel storage, wherein the level-(k+1) write-back request carries a first address, and k is an integer greater than or equal to 1; and
a reduce module, configured to: by using the level-(k+1) storage in response to the level-(k+1) write-back request, perform a reduce operation on data in a plurality of cache lines, corresponding to the first address, in the level-k storage, and write a result of the reduce operation into the level-(k+1) storage, wherein different cache lines in the plurality of cache lines correspond to different storage units in the level-k storage, statuses of the plurality of cache lines are pending-reduce states, and the pending-reduce states indicate that the data in the cache lines is valid and has not been reduced.

14. A multilevel storage-based data read/write apparatus, used in a processor core, wherein the apparatus comprises:
a compute module, configured to compute an i^{th} data block in a first intermediate result of a first parallel compute task, wherein i is an integer greater than or equal to 1, the i^{th} data block in the first intermediate result corresponds to a first address, and the first parallel compute task is used to compute a part of compute results in a target compute task; and
a sending module, configured to send a write-back request to a multilevel storage after the i^{th} data block in the first intermediate result is obtained through computing, wherein the write-back request indicates the multilevel storage to perform, level by level, a reduce operation on data in a plurality of cache lines, corresponding to the first address, in the multilevel storage, and write a final result of the reduce operation into the first address, wherein
the compute module is further configured to compute an (i+1)^{th} data block in the first intermediate result after the write-back request is sent.

15. A multilevel storage, wherein each level of storage in the multilevel storage comprises at least one independent storage unit;
a level-k storage in the multilevel storage is configured to send a level-(k+1) write-back request to a level-(k+1) storage in the multilevel storage, wherein the level-(k+1) write-back request carries a first address, and k is an integer greater than or equal to 1; and
the level-(k+1) storage is configured to: in response to the level-(k+1) write-back request, perform a reduce operation on data in a plurality of cache lines, corresponding to the first address, in the level-k storage, and write a result of the reduce operation into the level-(k+1) storage, wherein different cache lines in the plurality of cache lines correspond to different storage units in the level-k storage, statuses of the plurality of cache lines are pending-reduce states, and the pending-reduce states indicate that the data in the cache lines is valid and has not been reduced.

16. A processor, wherein the compute device comprises a multilevel storage and a plurality of processor cores, the multilevel storage is configured to implement steps performed by the multilevel storage in the multilevel storage-based data read/write method according to claim 12, and the processor core is configured to implement steps performed by the processor core in the multilevel storage-based data read/write method according to claim 12.

17. A compute device, wherein the compute device comprises a multilevel storage and a plurality of processor cores, the multilevel storage is configured to implement steps performed by the multilevel storage in the multilevel storage-based data read/write method according to claim 12, and the processor core is configured to implement steps performed by the processor core in the multilevel storage-based data read/write method according to claim 12.

18. A distributed cluster, wherein the distributed cluster comprises a multilevel storage and a plurality of processor cores, the multilevel storage is configured to implement steps performed by the multilevel storage in the multilevel storage-based data read/write method according to claim 12, and the processor core is configured to implement steps performed by the processor core in the multilevel storage-based data read/write method according to claim 12.

19. A storage medium, wherein the storage medium is configured to store program code, and the program code is readable and executable by a multilevel storage, to implement the multilevel storage-based data read/write method according to any one of claims 1 to 7.

20. A storage medium, wherein the storage medium is configured to store program code, and the program code is readable and executable by a processor core, to implement the multilevel storage-based data read/write method according to any one of claims 8 to 11.
